# EUROPEAN PATENT APPLICATION

(11) **EP 4 693 998 A1**
(43) Date of publication of application: **11.02.2026**
(21) Application number: 24733842.9
(22) Date of filing: 08.04.2024
(51) Int. Cl.: H04L 5/00

(54) **METHOD, USER EQUIPMENT, PROCESSING DEVICE AND STORAGE MEDIUM FOR REPORTING CHANNEL STATE INFORMATION, AND METHOD AND BASE STATION FOR TRANSMITTING CHANNEL STATE INFORMATION**

(30) Priority: 06.04.2023 US 202363457757 P; 12.05.2023 KR 20230062064
(71) Applicant: LG Electronics Inc., Seoul 07336 (KR)
(72) Inventor: MYUNG, Sechang, Seoul 06772 (KR); KIM, Seonwook, Seoul 06772 (KR); LEE, Youngdae, Seoul 06772 (KR); YANG, Suckchel, Seoul 06772 (KR); PARK, Haewook, Seoul 06772 (KR); CHUNG, Jaehoon, Seoul 06772 (KR)
(74) Representative: Plasseraud IP
(86) International application number: PCT/KR2024/004641
(87) International publication number: WO 2024/210678

(57) **Abstract**

A method of transmitting a channel state information (CSI) report by a user equipment (UE) in a wireless communication system includes receiving a CSI report configuration including a plurality of sub-configurations, each of the plurality of sub-configurations including at least one CSI-reference signal (CSI-RS) resource and a power control offset (PCO) value related to the at least one CSI-RS resource, determining a plurality of channel quality indicator (CQI) values based on the plurality of sub-configurations, and transmitting the CSI report based on the plurality of CQI values, wherein the CSI report configuration includes a CQI threshold, and based on presence of a CQI value greater than the CQI threshold from among the plurality of CQI values, the CSI report includes the CQI value greater than the CQI threshold.

## Description

### TECHNICAL FIELD

The present disclosure relates to a wireless communication system.

### BACKGROUND

A variety of technologies, such as machine-to-machine (M2M) communication, machine type communication (MTC), and a variety of devices demanding high data throughput, such as smartphones and tablet personal computers (PCs), have emerged and spread. Accordingly, the volume of data throughput demanded to be processed in a cellular network has rapidly increased. In order to satisfy such rapidly increasing data throughput, carrier aggregation technology or cognitive radio technology for efficiently employing more frequency bands and multiple input multiple output (MIMO) technology or multi-base station (BS) cooperation technology for raising data capacity transmitted on limited frequency resources have been developed.

As more and more communication devices have required greater communication capacity, there has been a need for enhanced mobile broadband (eMBB) communication relative to legacy radio access technology (RAT). In addition, massive machine type communication (mMTC) for providing various services at anytime and anywhere by connecting a plurality of devices and objects to each other is one main issue to be considered in next-generation communication.

Communication system design considering services/user equipment (UEs) sensitive to reliability and latency is also under discussion. The introduction of next-generation RAT is being discussed in consideration of eMBB communication, mMTC, ultra-reliable and low-latency communication (URLLC), and the like.

### DISCLOSURE

### Technical Problem

As the number of services/UEs that a network needs to support rapidly increases, a need for not only UE power saving but also network energy saving increases gradually.

One object of the present disclosure is to provide methods and procedures for network energy saving.

Another object of the present disclosure is to provide methods and procedures for transmitting downlink signals to enable network energy saving.

Another object of the present disclosure is to provide a channel state information (CSI) report, which is used to save network energy, with low signaling overhead.

The objects to be achieved with the present disclosure are not limited to what has been particularly described hereinabove and other objects not described herein will be more clearly understood by persons skilled in the art from the following detailed description.

### Technical Solution

According to an aspect of the present disclosure, a method of transmitting a channel state information (CSI) report by a user equipment (UE) in a wireless communication system is provided. The method includes receiving a CSI report configuration including a plurality of sub-configurations, each of the plurality of sub-configurations including at least one CSI-reference signal (CSI-RS) resource and a power control offset (PCO) value related to the at least one CSI-RS resource, determining a plurality of channel quality indicator (CQI) values based on the plurality of sub-configurations, and transmitting the CSI report based on the plurality of CQI values, wherein the CSI report configuration includes a CQI threshold, and based on presence of a CQI value greater than the CQI threshold from among the plurality of CQI values, the CSI report includes the CQI value greater than the CQI threshold.

According to another aspect of the present disclosure, a user equipment (UE) for transmitting a channel state information (CSI) report in a wireless communication system. The UE includes at least one transceiver, at least one processor, and at least one computer memory operably connected to the at least one processor and configured to store instructions that, when executed, cause the at least one processor to perform operations. The operations include receiving a CSI report configuration including a plurality of sub-configurations, each of the plurality of sub-configurations including at least one CSI-reference signal (CSI-RS) resource and a power control offset (PCO) value related to the at least one CSI-RS resource, determining a plurality of channel quality indicator (CQI) values based on the plurality of sub-configurations, and transmitting the CSI report based on the plurality of CQI values, wherein the CSI report configuration includes a CQI threshold, and based on presence of a CQI value greater than the CQI threshold from among the plurality of CQI values, the CSI report includes the CQI value greater than the CQI threshold.

According to another aspect of the present disclosure, a processing device in a wireless communication system is provided. The processing device includes at least one processor, and at least one computer memory operably connected to the at least one processor and configured to store instructions that, when executed, cause the at least one processor to perform operations. The operations include receiving a CSI report configuration including a plurality of sub-configurations, each of the plurality of sub-configurations including at least one CSI-reference signal (CSI-RS) resource and a power control offset (PCO) value related to the at least one CSI-RS resource, determining a plurality of channel quality indicator (CQI) values based on the plurality of sub-configurations, and transmitting the CSI report based on the plurality of CQI values, wherein the CSI report configuration includes a CQI threshold, and based on presence of a CQI value greater than the CQI threshold from among the plurality of CQI values, the CSI report includes the CQI value greater than the CQI threshold.

According to another aspect of the present disclosure, a computer-readable storage medium for storing at least one program code including instructions that, when executed, cause the at least one processor to perform operations is provided. The operations include receiving a CSI report configuration including a plurality of sub-configurations, each of the plurality of sub-configurations including at least one CSI-reference signal (CSI-RS) resource and a power control offset (PCO) value related to the at least one CSI-RS resource, determining a plurality of channel quality indicator (CQI) values based on the plurality of sub-configurations, and transmitting the CSI report based on the plurality of CQI values, wherein the CSI report configuration includes a CQI threshold, and based on presence of a CQI value greater than the CQI threshold from among the plurality of CQI values, the CSI report includes the CQI value greater than the CQI threshold.

According to another aspect of the present disclosure, a method of receiving a channel state information (CSI) report from a user equipment (UE) by a base station (BS) in a wireless communication system is provided. The method includes transmitting a CSI report configuration including a plurality of sub-configurations, each of the plurality of sub-configurations including at least one CSI-reference signal (CSI-RS) resource and a power control offset (PCO) value related to the at least one CSI-RS resource, and receiving the CSI report related to at least one of the plurality of sub-configurations, wherein the CSI report configuration includes a CQI threshold, and based on presence of a CQI value greater than the CQI threshold from among the plurality of CQI values, the CSI report includes the CQI value greater than the CQI threshold.

According to another aspect of the present disclosure, a base station (BS) for receiving a channel state information (CSI) report from a user equipment (UE) in a wireless communication system is provided. The BS includes at least one transceiver, at least one processor, and at least one computer memory operably connected to the at least one processor and configured to store instructions that, when executed, cause the at least one processor to perform operations. The operations include transmitting a CSI report configuration including a plurality of sub-configurations, each of the plurality of sub-configurations including at least one CSI-reference signal (CSI-RS) resource and a power control offset (PCO) value related to the at least one CSI-RS resource, and receiving the CSI report related to at least one of the plurality of sub-configurations, wherein the CSI report configuration includes a CQI threshold, and based on presence of a CQI value greater than the CQI threshold from among the plurality of CQI values, the CSI report includes the CQI value greater than the CQI threshold.

In each aspect of the present disclosure, based on absence of a CQI value greater than the CQI threshold from among the plurality of CQI values, the CSI report may not include the CQI value.

In each aspect of the present disclosure, the CSI report may include a first CSI part and a second CSI part, and the first CSI part may include sub-configuration related information regarding a sub-configuration in which a corresponding CQI value is included in the CSI report.

In each aspect of the present disclosure, the sub-configuration related information may include information regarding a number of sub-configurations in which a corresponding CQI value is included in the CSI report.

In each aspect of the present disclosure, the sub-configuration related information may include an index of a sub-configuration in which a corresponding CQI value is included in the CSI report.

In each aspect of the present disclosure, the CSI report configuration may further include information regarding a maximum number K of sub-configurations in which a corresponding CSI is included in the CSI report, and based on a number of CQI values greater than the CQI threshold being greater than K from among the plurality of CQI values, the CSI report may include K CQI values greater than the CQI threshold.

In each aspect of the present disclosure, based on a number of CQI values greater than the CQI threshold being less than K from among the plurality of CQI values, the CSI report may include only a CQI value greater than the CQI threshold.

In each aspect of the present disclosure, the PCO value may include a power offset value of physical downlink shared channel (PDSCH) resource element (RE) to CSI-RS RE for the CSI-RS RE assumed when the UE derives a CQI value.

The foregoing solutions are merely a part of the examples of the present disclosure and various examples into which the technical features of the present disclosure are incorporated may be derived and understood by persons skilled in the art from the following detailed description.

### Advantageous Effects

According to some implementation(s) of the present disclosure, methods and procedures for energy saving of a network, a base station (BS), and/or a user equipment (UE) may be provided.

According to some implementation(s) of the present disclosure, methods and procedures for transmitting downlink signals to enable energy saving of a network, a BS, and/or a UE may be provided.

According to some implementations of the present disclosure, CSI reports utilized for network energy saving may be provided with low signaling overhead.

The effects according to the present disclosure are not limited to what has been particularly described hereinabove and other effects not described herein will be more clearly understood by persons skilled in the art related to the present disclosure from the following detailed description.

### BRIEF DESCRIPTION OF THE DRAWINGS

The accompanying drawings, which are included to provide a further understanding of the present disclosure, illustrate examples of implementations of the present disclosure and together with the detailed description serve to explain implementations of the present disclosure:
FIG. 1 illustrates an example of a communication system 1 to which implementations of the present disclosure are applied;
FIG. 2 is a block diagram illustrating examples of communication devices capable of performing a method according to the present disclosure;
FIG. 3 illustrates another example of a wireless device capable of performing implementation(s) of the present disclosure;
FIG. 4 illustrates an example of a frame structure used in a 3rd generation partnership project (3GPP)-based wireless communication system;
FIG. 5 illustrates a resource grid of a slot;
FIG. 6 shows an example of multiplexing UCI to a PUSCH;
FIG. 7 illustrates a flow of a channel state information (CSI) related procedure;
FIG. 8 illustrates spatial elements adaptation;
FIG. 9 illustrates a flow of CSI report transmission in a UE according to some implementations of the present disclosure; and
FIG. 10 illustrates a flow of CSI report reception in a BS according to some implementations of the present disclosure.

### DETAILED DESCRIPTION

Hereinafter, implementations according to the present disclosure will be described in detail with reference to the accompanying drawings. The detailed description, which will be given below with reference to the accompanying drawings, is intended to explain exemplary implementations of the present disclosure, rather than to show the only implementations that may be implemented according to the present disclosure. The following detailed description includes specific details in order to provide a thorough understanding of the present disclosure. However, it will be apparent to those skilled in the art that the present disclosure may be practiced without such specific details.

In some instances, known structures and devices may be omitted or may be shown in block diagram form, focusing on important features of the structures and devices, so as not to obscure the concept of the present disclosure. The same reference numbers will be used throughout the present disclosure to refer to the same or like parts.

A technique, a device, and a system described below may be applied to a variety of wireless multiple access systems. The multiple access systems may include, for example, a code division multiple access (CDMA) system, a frequency division multiple access (FDMA) system, a time division multiple access (TDMA) system, an orthogonal frequency division multiple access (OFDMA) system, a single-carrier frequency division multiple access (SC-FDMA) system, a multi-carrier frequency division multiple access (MC-FDMA) system, etc. CDMA may be implemented by radio technology such as universal terrestrial radio access (UTRA) or CDMA2000. TDMA may be implemented by radio technology such as global system for mobile communications (GSM), general packet radio service (GPRS), enhanced data rates for GSM evolution (EDGE) (i.e., GERAN), etc. OFDMA may be implemented by radio technology such as institute of electrical and electronics engineers (IEEE) 802.11 (Wi-Fi), IEEE 802.16 (WiMAX), IEEE 802.20, evolved-UTRA (E-UTRA), etc. UTRA is part of universal mobile telecommunications system (UMTS) and 3rd generation partnership project (3GPP) long-term evolution (LTE) is part of E-UMTS using E-UTRA. 3GPP LTE adopts OFDMA on downlink (DL) and adopts SC-FDMA on uplink (UL). LTE-advanced (LTE-A) is an evolved version of 3GPP LTE.

For convenience of description, description will be given under the assumption that the present disclosure is applied to LTE and/or new RAT (NR). However, the technical features of the present disclosure are not limited thereto. For example, although the following detailed description is given based on mobile communication systems corresponding to 3GPP LTE/NR systems, the mobile communication systems are applicable to other arbitrary mobile communication systems except for matters that are specific to the 3GPP LTE/NR system.

For terms and techniques that are not described in detail among terms and techniques used in the present disclosure, reference may be made to 3GPP based standard specifications, for example, 3GPP TS 36.211, 3GPP TS 36.212, 3GPP TS 36.213, 3GPP TS 36.321, 3GPP TS 36.300, 3GPP TS 36.331, 3GPP TS 37.213, 3GPP TS 38.211, 3GPP TS 38.212, 3GPP TS 38.213, 3GPP TS 38.214, 3GPP TS 38.300, 3GPP TS 38.304, 3GPP TS 38.331, etc.

In examples of the present disclosure described later, if a device "assumes" something, this may mean that a channel transmission entity transmits a channel in compliance with the corresponding "assumption". This also may mean that a channel reception entity receives or decodes the channel in the form of conforming to the "assumption" on the premise that the channel has been transmitted in compliance with the "assumption".

In the present disclosure, a user equipment (UE) may be fixed or mobile. Each of various devices that transmit and/or receive user data and/or control information by communicating with a base station (BS) may be the UE. The term UE may be referred to as terminal equipment, mobile station (MS), mobile terminal (MT), user terminal (UT), subscriber station (SS), wireless device, personal digital assistant (PDA), wireless modem, handheld device, etc. In the present disclosure, a BS refers to a fixed station that communicates with a UE and/or another BS and exchanges data and control information with a UE and another BS. The term BS may be referred to as advanced base station (ABS), Node-B (NB), evolved Node-B (eNB), base transceiver system (BTS), access point (AP), processing server (PS), etc. Particularly, a BS of a universal terrestrial radio access (UTRAN) is referred to as an NB, a BS of an evolved-UTRAN (E-UTRAN) is referred to as an eNB, and a BS of new radio access technology network is referred to as a gNB. Hereinbelow, for convenience of description, the NB, eNB, or gNB will be referred to as a BS regardless of the type or version of communication technology.

In the present disclosure, a node refers to a fixed point capable of transmitting/receiving a radio signal to/from a UE by communication with the UE. Various types of BSs may be used as nodes regardless of the names thereof. For example, a BS, NB, eNB, pico-cell eNB (PeNB), home eNB (HeNB), relay, repeater, etc. may be a node. Furthermore, a node may not be a BS. For example, a radio remote head (RRH) or a radio remote unit (RRU) may be a node. Generally, the RRH and RRU have power levels lower than that of the BS. Since the RRH or RRU (hereinafter, RRH/RRU) is connected to the BS through a dedicated line such as an optical cable in general, cooperative communication according to the RRH/RRU and the BS may be smoothly performed relative to cooperative communication according to BSs connected through a wireless link. At least one antenna is installed per node. An antenna may refer to a physical antenna port or refer to a virtual antenna or an antenna group. The node may also be called a point.

In the present disclosure, a cell refers to a specific geographical area in which one or more nodes provide communication services. Accordingly, in the present disclosure, communication with a specific cell may mean communication with a BS or a node providing communication services to the specific cell. A DL/UL signal of the specific cell refers to a DL/UL signal from/to the BS or the node providing communication services to the specific cell. A cell providing UL/DL communication services to a UE is especially called a serving cell. Furthermore, channel status/quality of the specific cell refers to channel status/quality of a channel or a communication link generated between the BS or the node providing communication services to the specific cell and the UE. In 3GPP-based communication systems, the UE may measure a DL channel state from a specific node using cell-specific reference signal(s) (CRS(s)) transmitted on a CRS resource and/or channel state information reference signal(s) (CSI-RS(s)) transmitted on a CSI-RS resource, allocated to the specific node by antenna port(s) of the specific node.

A 3GPP-based communication system uses the concept of a cell in order to manage radio resources, and a cell related with the radio resources is distinguished from a cell of a geographic area.

The "cell" of the geographic area may be understood as coverage within which a node may provide services using a carrier, and the "cell" of the radio resources is associated with bandwidth (BW), which is a frequency range configured by the carrier. Since DL coverage, which is a range within which the node is capable of transmitting a valid signal, and UL coverage, which is a range within which the node is capable of receiving the valid signal from the UE, depend upon a carrier carrying the signal, coverage of the node may also be associated with coverage of the "cell" of radio resources used by the node. Accordingly, the term "cell" may be used to indicate service coverage by the node sometimes, radio resources at other times, or a range that a signal using the radio resources may reach with valid strength at other times.

In 3GPP communication standards, the concept of the cell is used in order to manage radio resources. The "cell" associated with the radio resources is defined by a combination of DL resources and UL resources, that is, a combination of a DL component carrier (CC) and a UL CC. The cell may be configured by the DL resources only or by the combination of the DL resources and the UL resources. If carrier aggregation is supported, linkage between a carrier frequency of the DL resources (or DL CC) and a carrier frequency of the UL resources (or UL CC) may be indicated by system information. For example, the combination of the DL resources and the UL resources may be indicated by system information block type 2 (SIB2) linkage. In this case, the carrier frequency may be equal to or different from a center frequency of each cell or CC. When carrier aggregation (CA) is configured, the UE has only one radio resource control (RRC) connection with a network. During RRC connection establishment/re-establishment/handover, one serving cell provides non-access stratum (NAS) mobility information. During RRC connection re-establishment/handover, one serving cell provides security input. This cell is referred to as a primary cell (Pcell). The Pcell refers to a cell operating on a primary frequency on which the UE performs an initial connection establishment procedure or initiates a connection re-establishment procedure. According to UE capability, secondary cells (Scells) may be configured to form a set of serving cells together with the Pcell. The Scell may be configured after completion of RRC connection establishment and used to provide additional radio resources in addition to resources of a specific cell (SpCell). A carrier corresponding to the Pcell on DL is referred to as a downlink primary CC (DL PCC), and a carrier corresponding to the Pcell on UL is referred to as an uplink primary CC (UL PCC). A carrier corresponding to the Scell on DL is referred to as a downlink secondary CC (DL SCC), and a carrier corresponding to the Scell on UL is referred to as an uplink secondary CC (UL SCC).

In a dual connectivity (DC) operation, the term special cell (SpCell) refers to a Pcell of a master cell group (MCG) or a primary secondary cell (PSCell) of a secondary cell group (SCG). The SpCell supports PUCCH transmission and contention-based random access and is always activated. The MCG is a group of service cells associated with a master node (e.g., BS) and includes the SpCell (Pcell) and optionally one or more Scells. For a UE configured with DC, the SCG is a subset of serving cells associated with a secondary node and includes the PSCell and 0 or more Scells. The PSCell is a primary Scell of the SCG. For a UE in RRC_CONNECTED state, that is not configured with CA or DC, only one serving cell including only the Pcell is present. For a UE in RRC_CONNECTED state, that is configured with CA or DC, the term serving cells refers to a set of cells including SpCell(s) and all Scell(s). In DC, two medium access control (MAC) entities, i.e., one MAC entity for the MCG and one MAC entity for the SCG, are configured for the UE.

For a UE that is configured with CA and is not configured with DC, a Pcell PUCCH group (also called a primary PUCCH group) including the Pcell and 0 or more Scells and an Scell PUCCH group (also called a secondary PUCCH group) including only Scell(s) may be configured. For the Scell, an Scell on which a PUCCH associated with the corresponding cell is transmitted (hereinafter, a PUCCH Scell) may be configured. An Scell for which a PUCCH Scell is indicated belongs to the Scell PUCCH group (i.e., the secondary PUCCH group) and PUCCH transmission of related uplink control information (UCI) is performed on the PUCCH Scell. If a PUCCH Scell is not indicated for an Scell or a cell which is indicated for PUCCH transmission for the Scell is a Pcell, the Scell belongs to the Pcell PUCCH group (i.e., the primary PUCCH group) and PUCCH transmission of related UCI is performed on the Pcell. Hereinbelow, if the UE is configured with the SCG and some implementations of the present disclosure related to a PUCCH are applied to the SCG, the primary cell may refer to the PSCell of the SCG. If the UE is configured with the PUCCH Scell and some implementations of the present disclosure related to the PUCCH are applied to the secondary PUCCH group, the primary cell may refer to the PUCCH Scell of the secondary PUCCH group.

In a wireless communication system, the UE receives information on DL from the BS and the UE transmits information on UL to the BS. The information that the BS and UE transmit and/or receive includes data and a variety of control information and there are various physical channels according to types/usage of the information that the UE and the BS transmit and/or receive.

The 3GPP-based communication standards define DL physical channels corresponding to resource elements carrying information originating from a higher layer and DL physical signals corresponding to resource elements which are used by the physical layer but do not carry the information originating from the higher layer. For example, a physical downlink shared channel (PDSCH), a physical broadcast channel (PBCH), a physical multicast channel (PMCH), a physical control format indicator channel (PCFICH), a physical downlink control channel (PDCCH), etc. are defined as the DL physical channels, and a reference signal (RS) and a synchronization signal are defined as the DL physical signals. The RS, which is also referred to as a pilot, represents a signal with a predefined special waveform known to both the BS and the UE. For example, a demodulation reference signal (DMRS), a channel state information RS (CSI-RS), a positioning reference signal (PRS), and etc. are defined as DL RSs. The 3GPP-based communication standards define UL physical channels corresponding to resource elements carrying information originating from the higher layer and UL physical signals corresponding to resource elements which are used by the physical layer but do not carry the information originating from the higher layer. For example, a physical uplink shared channel (PUSCH), a physical uplink control channel (PUCCH), and a physical random access channel (PRACH) are defined as the UL physical channels, and a DMRS for a UL control/data signal, a sounding reference signal (SRS) used for UL channel measurement, etc. are defined.

In the present disclosure, a PDCCH refers to a set of time-frequency resources (e.g., resource elements (REs)) carrying downlink control information (DCI), and a PDSCH refers to a set of time-frequency resources carrying DL data. A PUCCH, a PUSCH, and a PRACH refer to a set of time-frequency resources carrying UCI, a set of time-frequency resources carrying UL data, and a set of time-frequency resources carrying random access signals, respectively. In the following description, "the UE transmits/receives a PUCCH/PUSCH/PRACH" is used as the same meaning that the UE transmits/receives the UCI/UL data/random access signals on or through the PUCCH/PUSCH/PRACH, respectively. In addition, "the BS transmits/receives a PBCH/PDCCH/PDSCH" is used as the same meaning that the BS transmits the broadcast information/DCI/DL data on or through a PBCH/PDCCH/PDSCH, respectively.

In the present disclosure, a radio resource (e.g., a time-frequency resource) scheduled or configured to the UE by the BS for transmission or reception of the PUCCH/PUSCH/PDSCH may be referred to as a PUCCH/PUSCH/PDSCH resource.

Since a communication device receives a synchronization signal (SS), DMRS, CSI-RS, PRS, PBCH, PDCCH, PDSCH, PUSCH, and/or PUCCH in the form of radio signals on a cell, the communication device may not select and receive radio signals including only a specific physical channel or a specific physical signal through a radio frequency (RF) receiver, or may not select and receive radio signals without a specific physical channel or a specific physical signal through the RF receiver. In actual operations, the communication device receives radio signals on the cell via the RF receiver, converts the radio signals, which are RF band signals, into baseband signals, and then decodes physical signals and/or physical channels in the baseband signals using one or more processors. Thus, in some implementations of the present disclosure, not receiving physical signals and/or physical channels may mean that a communication device does not attempt to restore the physical signals and/or physical channels from radio signals, for example, does not attempt to decode the physical signals and/or physical channels, rather than that the communication device does not actually receive the radio signals including the corresponding physical signals and/or physical channels.

As more and more communication devices have required greater communication capacity, there has been a need for eMBB communication relative to legacy radio access technology (RAT). In addition, massive MTC for providing various services at anytime and anywhere by connecting a plurality of devices and objects to each other is one main issue to be considered in next-generation communication. Further, communication system design considering services/UEs sensitive to reliability and latency is also under discussion. The introduction of next-generation RAT is being discussed in consideration of eMBB communication, massive MTC, ultra-reliable and low-latency communication (URLLC), and the like. Currently, in 3GPP, a study on the next-generation mobile communication systems after EPC is being conducted. In the present disclosure, for convenience, the corresponding technology is referred to a new RAT (NR) or fifth-generation (5G) RAT, and a system using NR or supporting NR is referred to as an NR system.

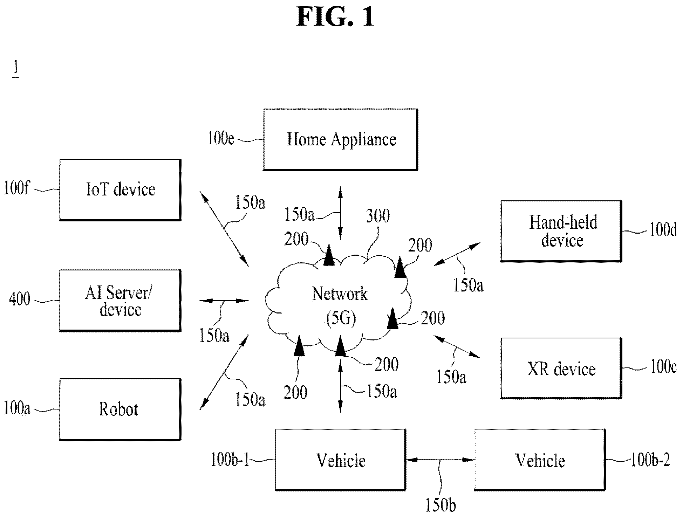

FIG. 1 illustrates an example of a communication system 1 to which implementations of the present disclosure are applied. Referring to FIG. 1, the communication system 1 applied to the present disclosure includes wireless devices, BSs, and a network. Here, the wireless devices represent devices performing communication using RAT (e.g., 5G NR or LTE (e.g., E-UTRA)) and may be referred to as communication/radio/SG devices. The wireless devices may include, without being limited to, a robot 100a, vehicles 100b-1 and 100b-2, an extended reality (XR) device 100c, a hand-held device 100d, a home appliance 100e, an Internet of Things (IoT) device 100f, and an artificial intelligence (AI) device/server 400. For example, the vehicles may include a vehicle having a wireless communication function, an autonomous driving vehicle, and a vehicle capable of performing vehicle-to-vehicle communication. Here, the vehicles may include an unmanned aerial vehicle (UAV) (e.g., a drone). The XR device may include an augmented reality (AR)/virtual reality (VR)/mixed reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or smartglasses), and a computer (e.g., a notebook). The home appliance may include a TV, a refrigerator, and a washing machine. The IoT device may include a sensor and a smartmeter. For example, the BSs and the network may also be implemented as wireless devices and a specific wireless may operate as a BS/network node with respect to another wireless device.

The wireless devices 100a to 100f may be connected to a network 300 via BSs 200. AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. vehicle-to-vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a and 150b may be established between the wireless devices 100a to 100f and the BSs 200 and between the wireless devices 100a to 100f). Here, the wireless communication/connections such as UL/DL communication 150a and sidelink communication 150b (or, device-to-device (D2D) communication) may be established by various RATs (e.g., 5G NR). The wireless devices and the BSs/wireless devices may transmit/receive radio signals to/from each other through the wireless communication/connections 150a and 150b. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

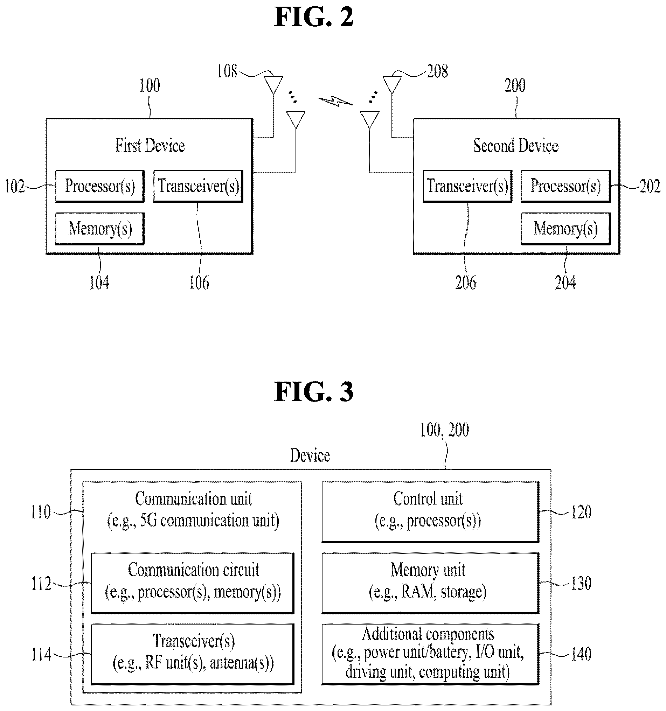

FIG. 2 is a block diagram illustrating examples of communication devices capable of performing a method according to the present disclosure. Referring to FIG. 2, a first wireless device 100 and a second wireless device 200 may transmit and/or receive radio signals through a variety of RATs (e.g., LTE and NR). Here, {the first wireless device 100 and the second wireless device 200} may correspond to {the wireless device 100x and the BS 200} and/or {the wireless device 100x and the wireless device 100x} of FIG. 1.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the below-described /proposed functions, procedures, and/or methods. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver(s) 106 and then store information obtained by processing the second information/signals in the memory(s) 104. The memory(s) 104 may be connected to the processor(s) 102 and may store a variety of information related to operations of the processor(s) 102. For example, the memory(s) 104 may perform a part or all of processes controlled by the processor(s) 102 or store software code including instructions for performing the below-described/proposed procedures and/or methods. Here, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 is used interchangeably with radio frequency (RF) unit(s). In the present disclosure, the wireless device may represent the communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the below-described/proposed functions, procedures, and/or methods. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may perform a part or all of processes controlled by the processor(s) 202 or store software code including instructions for performing the below-described/proposed procedures and/or methods. Here, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 is used interchangeably with RF unit(s). In the present disclosure, the wireless device may represent the communication modem/circuit/chip.

The wireless communication technology implemented in the wireless devices 100 and 200 of the present disclosure may include narrowband Internet of things for low-power communication as well as LTE, NR, and 6G. For example, the NB-IoT technology may be an example of low-power wide-area network (LPWAN) technologies and implemented in standards such as LTE Cat NB1 and/or LTE Cat NB2. However, the NB-IoT technology is not limited to the above names. Additionally or alternatively, the wireless communication technology implemented in the wireless devices XXX and YYY of the present disclosure may perform communication based on the LTE-M technology. For example, the LTE-M technology may be an example of LPWAN technologies and called by various names including enhanced machine type communication (eMTC). For example, the LTE-M technology may be implemented in at least one of the following various standards: 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, etc., but the LTE-M technology is not limited to the above names. Additionally or alternatively, the wireless communication technology implemented in the wireless devices XXX and YYY of the present disclosure may include at least one of ZigBee, Bluetooth, and LPWAN in consideration of low-power communication, but the wireless communication technology is not limited to the above names. For example, the ZigBee technology may create a personal area network (PAN) related to small/low-power digital communication based on various standards such as IEEE 802.15.4 and so on, and the ZigBee technology may be called by various names.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as a physical (PHY) layer, medium access control (MAC) layer, a radio link control (RLC) layer, a packet data convergence protocol (PDCP) layer, radio resource control (RRC) layer, and a service data adaptation protocol (SDAP) layer). The one or more processors 102 and 202 may generate one or more protocol data units (PDUs) and/or one or more service data units (SDUs) according to the functions, procedures, proposals, and/or methods disclosed in the present disclosure. The one or more processors 102 and 202 may generate messages, control information, data, or information according to the functions, procedures, proposals, and/or methods disclosed in the present disclosure. The one or more processors 102 and 202 may generate signals (e.g., baseband signals) including PDUs, SDUs, messages, control information, data, or information according to the functions, procedures, proposals, and/or methods disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the functions, procedures, proposals, and/or methods disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The functions, procedures, proposals, and/or methods disclosed in the present disclosure may be implemented using firmware or software, and the firmware or software may be configured to include the modules, procedures, or functions. Firmware or software configured to perform the functions, procedures, proposals, and/or methods disclosed in the present disclosure may be included in the one or more processors 102 and 202 or stored in the one or more memories 104 and 204 so as to be driven by the one or more processors 102 and 202. The functions, procedures, proposals, and/or methods disclosed in the present disclosure may be implemented using firmware or software in the form of code, commands, and/or a set of commands.

The one or more memories 104 and 204 may be connected to the one or more processors 102 and 202 and store various types of data, signals, messages, information, programs, code, commands, and/or instructions. The one or more memories 104 and 204 may be configured by read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of the present disclosure, to one or more other devices. The one or more transceivers 106 and 206 may receive user data, control information, and/or radio signals/channels, mentioned in the functions, procedures, proposals, methods, and/or operational flowcharts disclosed in the present disclosure, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208. The one or more transceivers 106 and 206 may be configured to transmit and receive user data, control information, and/or radio signals/channels, mentioned in the functions, procedures, proposals, methods, and/or operational flowcharts disclosed in the present disclosure, through the one or more antennas 108 and 208. In the present disclosure, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

FIG. 3 illustrates another example of a wireless device capable of performing implementation(s) of the present disclosure. Referring to FIG. 3, wireless devices 100 and 200 may correspond to the wireless devices 100 and 200 of FIG. 2 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 2. For example, the transceiver(s) 114 may include the one or more transceivers 106 and 206 and/or the one or more antennas 108 and 208 of FIG. 2. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 1), the vehicles (100b-1 and 100b-2 of FIG. 1), the XR device (100c of FIG. 1), the hand-held device (100d of FIG. 1), the home appliance (100e of FIG. 1), the IoT device (100f of FIG. 1), a digital broadcast UE, a hologram device, a public safety device, an MTC device, a medicine device, a fintech device (or a finance device), a security device, a climate/environment device, the AI server/device (400 of FIG. 1), the BS (200 of FIG. 1), a network node, etc. The wireless device may be used in a mobile or fixed place according to a use-case/service.

In FIG. 3, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an electronic control unit (ECU), a graphical processing unit, and a memory control processor. As another example, the memory 130 may be configured by a random access memory (RAM), a dynamic RAM (DRAM), a read-only memory (ROM)), a flash memory, a transitory memory, a non-transitory memory, and/or a combination thereof.

In the present disclosure, the at least one memory (e.g., 104 or 204) may store instructions or programs, and the instructions or programs may cause, when executed, at least one processor operably connected to the at least one memory to perform operations according to some embodiments or implementations of the present disclosure.

In the present disclosure, a computer readable (non-transitory) storage medium may store at least one instruction or program, and the at least one instruction or program may cause, when executed by at least one processor, the at least one processor to perform operations according to some embodiments or implementations of the present disclosure.

In the present disclosure, a processing device or apparatus may include at least one processor, and at least one computer memory operably connected to the at least one processor. The at least one computer memory may store instructions or programs, and the instructions or programs may cause, when executed, the at least one processor operably connected to the at least one memory to perform operations according to some embodiments or implementations of the present disclosure.

In the present disclosure, a computer program may include program code stored on at least one computer-readable (non-transitory) storage medium and, when executed, configured to perform operations according to some implementations of the present disclosure or cause at least one processor to perform the operations according to some implementations of the present disclosure. The computer program may be provided in the form of a computer program product. The computer program product may include at least one computer-readable (non-transitory) storage medium.

A communication device of the present disclosure includes at least one processor; and at least one computer memory operably connected to the at least one processor and configured to store instructions for causing, when executed, the at least one processor to perform operations according to example(s) of the present disclosure described later.

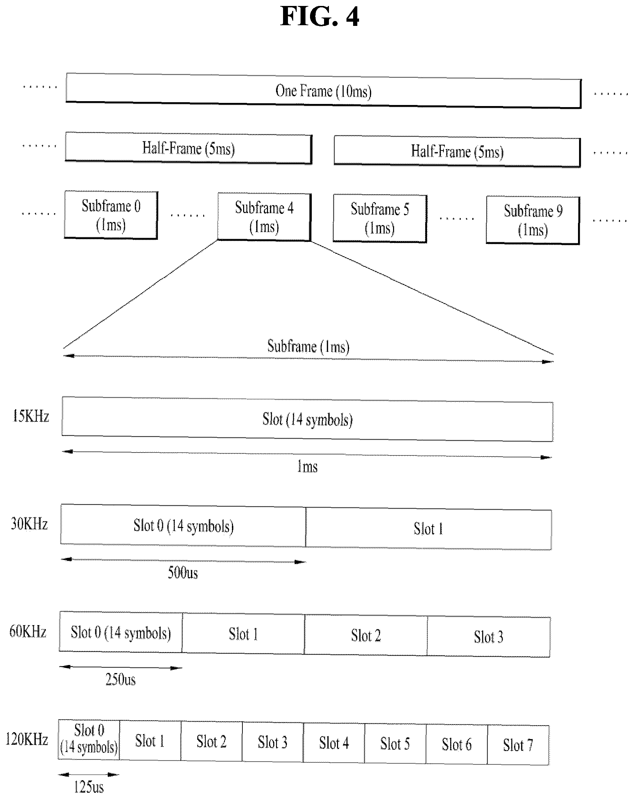

FIG. 4 illustrates an example of a frame structure used in a 3GPP-based wireless communication system.

The frame structure of FIG. 4 is purely exemplary and the number of subframes, the number of slots, and the number of symbols, in a frame, may be variously changed. In an NR system, different OFDM numerologies (e.g., subcarrier spacings (SCSs)) may be configured for multiple cells which are aggregated for one UE. Accordingly, the (absolute time) duration of a time resource including the same number of symbols (e.g., a subframe, a slot, or a transmission time interval (TTI)) may be differently configured for the aggregated cells. Here, the symbol may include an OFDM symbol (or cyclic prefix - OFDM (CP-OFDM) symbol) and an SC-FDMA symbol (or discrete Fourier transform-spread-OFDM (DFT-s-OFDM) symbol). In the present disclosure, the symbol, the OFDM-based symbol, the OFDM symbol, the CP-OFDM symbol, and the DFT-s-OFDM symbol are used interchangeably.

Referring to FIG. 4, in the NR system, UL and DL transmissions are organized into frames. Each frame has a duration of T_{f} = (△fₘₐₓ*N_{f}/100)*T_{c} = 10 ms and is divided into two half-frames of 5 ms each. A basic time unit for NR is T_{c} = 1/(△fₘₐₓ*N_{f}) where △fₘₐₓ = 480*10³ Hz and N_{f} = 4096. For reference, a basic time unit for LTE is Tₛ = 1/(△f_{ref}*N_{f,ref}) where △f_{ref} = 15*10³ Hz and N_{f,ref} = 2048. T_{c} and Tₛ have the relationship of a constant κ = Tₛ/T_{c} = 64. Each half-frame includes 5 subframes and a duration T_{sf} of a single subframe (SF) is 1 ms. Subframes are further divided into slots and the number of slots in a subframe depends on a subcarrier spacing. Each slot includes 14 or 12 OFDM symbols based on a cyclic prefix. In a normal CP, each slot includes 14 OFDM symbols and, in an extended CP, each slot includes 12 OFDM symbols. The numerology depends on an exponentially scalable subcarrier spacing △f = 2^{u}*15 kHz. The table below shows the number of OFDM symbols (*N*^{slot}_{symb}) per slot, the number of slots (*N*^{frame,u}ₛₗₒₜ) per frame, and the number of slots (*N*^{subframe,u}ₛₗₒₜ) per subframe.

**Table 1**

| *u* | *N*^{slot}_{symb} | *N*^{frame,u}ₛₗₒₜ | *N*^{subframe,u}ₛₗₒₜ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |
| 5 | 14 | 320 | 32 |
| 6 | 14 | 640 | 64 |

The table below shows the number of OFDM symbols per slot, the number of slots per frame, and the number of slots per subframe, according to the subcarrier spacing △f = 2^{u*}15 kHz.

**Table 2**

| *u* | *N*^{slot}_{symb} | *N*^{frame,u}ₛₗₒₜ | *N*^{subframe,u}ₛₗₒₜ |
|---|---|---|---|
| 2 | 12 | 40 | 4 |

For a subcarrier spacing configuration u, slots may be indexed within a subframe in ascending order as follows: n^{u}ₛ ∈ {0, ..., n^{subframe,u}ₛₗₒₜ - 1} and indexed within a frame in ascending order as follows: n^{u}_{s,f} ∈ {0, ..., n^{frame,u}ₛₗₒₜ - 1}.

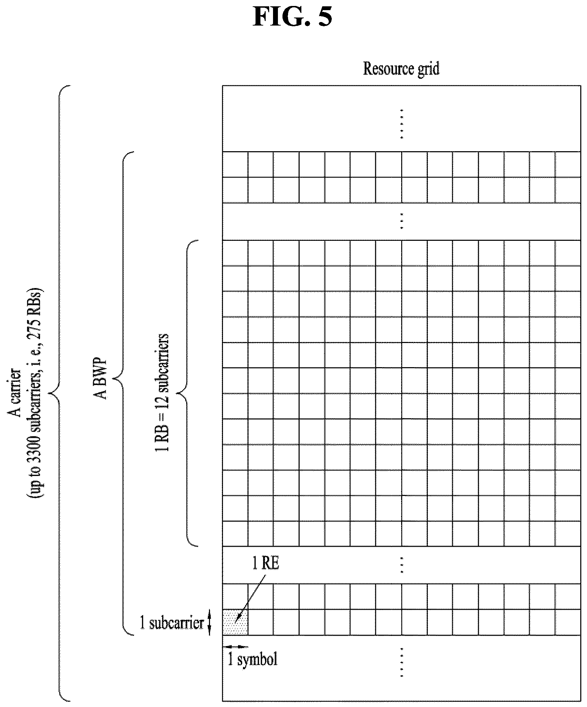

FIG. 5 illustrates a resource grid of a slot. The slot includes multiple (e.g., 14 or 12) symbols in the time domain. For each numerology (e.g., subcarrier spacing) and carrier, a resource grid of *N*^{size,u}_{grid,x}**N*^{RB}_{sc} subcarriers and *N*^{subframe,u}_{symb} OFDM symbols is defined, starting at a common resource block (CRB) N^{start,u}_{grid} indicated by higher layer signaling (e.g. RRC signaling), where *N*^{size,u}_{grid,x} is the number of resource blocks (RBs) in the resource grid and the subscript x is DL for downlink and UL for uplink. *N*^{RB}_{sc} is the number of subcarriers per RB. In the 3GPP-based wireless communication system, *N*^{RB}_{sc} is typically 12. There is one resource grid for a given antenna port *p,* a subcarrier spacing configuration *u,* and a transmission link (DL or UL). The carrier bandwidth *N*^{size,u}_{grid} for the subcarrier spacing configuration u is given to the UE by a higher layer parameter (e.g. RRC parameter). Each element in the resource grid for the antenna port *p* and the subcarrier spacing configuration u is referred to as a resource element (RE) and one complex symbol may be mapped to each RE. Each RE in the resource grid is uniquely identified by an index *k* in the frequency domain and an index *l* representing a symbol location relative to a reference point in the time domain. In the NR system, an RB is defined by 12 consecutive subcarriers in the frequency domain. In the NR system, RBs are classified into CRBs and physical resource blocks (PRBs). The CRBs are numbered from 0 upwards in the frequency domain for the subcarrier spacing configuration u. The center of subcarrier 0 of CRB 0 for the subcarrier spacing configuration u is equal to 'Point A' which serves as a common reference point for RB grids. The PRBs for subcarrier spacing configuration u are defined within a bandwidth part (BWP) and numbered from 0 to *N*^{size,u}_{BWP,i}-1, where i is a number of the BWP. The relation between a PRB n_{PRB} in a BWP i and a CRB n^{u}_{CRB} is given by: n^{u}_{PRB} = n^{u}_{CRB} + *N*^{size,u}_{BWP,i}, where *N*^{size}_{BWP,i} is a CRB in which the BWP starts relative to CRB 0. The BWP includes a plurality of consecutive RBs in the frequency domain. For example, the BWP may be a subset of contiguous CRBs defined for a given numerology uᵢ in the BWP i on a given carrier. A carrier may include a maximum of N (e.g., 5) BWPs. The UE may be configured to have one or more BWPs on a given component carrier. Data communication is performed through an activated BWP and only a predetermined number of BWPs (e.g., one BWP) among BWPs configured for the UE may be active on the component carrier.

For each serving cell in a set of DL BWPs or UL BWPs, the network may configure at least an initial DL BWP and one (if the serving cell is configured with uplink) or two (if supplementary uplink is used) initial UL BWPs. The network may configure additional UL and DL BWPs. For each DL BWP or UL BWP, the UE may be provided the following parameters for the serving cell: i) an SCS; ii) a CP; iii) a CRB *N*^{start}_{BWP} = *O*_{carrier} + *RB*ₛₜₐᵣₜ and the number of contiguous RBs *N*^{size}_{BWP} = L_{RB} provided by an RRC parameter *locationAndBandwidth,* which indicates an offset *RB*ₛₑₜ and a length *L*_{RB} as a resource indicator value (RIV) on the assumption of *N*^{start}_{BWP} = 275, and a value *O*_{carrier} provided by an RRC parameter *offsetToCarrier* for the SCS; an index in the set of DL BWPs or UL BWPs; a set of BWP-common parameters; and a set of BWP-dedicated parameters.

Virtual resource blocks (VRBs) may be defined within the BWP and indexed from 0 to *N*^{size,u}_{BWP,i}-1, where i denotes a BWP number. The VRBs may be mapped to PRBs according to interleaved mapping or non-interleaved mapping. In some implementations, VRB n may be mapped to PRB n for non-interleaved VRB-to-PRB mapping.

NR frequency bands are defined as two types of frequency ranges, i.e., FR1 and FR2. FR2 is also referred to as millimeter wave (mmW). The following table shows frequency ranges within which NR may operate.

**Table 3**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Hereinafter, physical channels that may be used in the 3GPP-based wireless communication system will be described in detail.

A PDCCH carries DCI. For example, the PDCCH (i.e., DCI) carries information about transport format and resource allocation of a downlink shared channel (DL-SCH), information about resource allocation of an uplink shared channel (UL-SCH), paging information about a paging channel (PCH), system information about the DL-SCH, information about resource allocation for a control message, such as a random access response (RAR) transmitted on a PDSCH, of a layer (hereinafter, higher layer) positioned higher than a physical layer among protocol stacks of the UE/BS, a transmit power control command, information about activation/deactivation of configured scheduling (CS), etc. DCI including resource allocation information on the DL-SCH is called PDSCH scheduling DCI, and DCI including resource allocation information on the UL-SCH is called PUSCH scheduling DCI. The DCI includes a cyclic redundancy check (CRC). The CRC is masked/scrambled with various identifiers (e.g., radio network temporary identifier (RNTI)) according to an owner or usage of the PDCCH. For example, if the PDCCH is for a specific UE, the CRS is masked with a UE identifier (e.g., cell-RNTI (C-RNTI)). If the PDCCH is for a paging message, the CRC is masked with a paging RNTI (P-RNTI). If the PDCCH is for system information (e.g., system information block (SIB)), the CRC is masked with a system information RNTI (SI-RNTI). If the PDCCH is for a random access response, the CRC is masked with a random access-RNTI (RA-RNTI).

When a PDCCH on one serving cell schedules a PDSCH or a PUSCH on another serving cell, it is referred to cross-carrier scheduling. Cross-carrier scheduling with a carrier indicator field (CIF) may allow a PDCCH on a serving cell to schedule resources on another serving cell. When a PDSCH on a serving cell schedules a PDSCH or a PUSCH on the serving cell, it is referred to as self-carrier scheduling. When the cross-carrier scheduling is used in a cell, the BS may provide information about a cell scheduling the cell to the UE. For example, the BS may inform the UE whether a serving cell is scheduled by a PDCCH on another (scheduling) cell or scheduled by the serving cell. If the serving cell is scheduled by the other (scheduling) cell, the BS may inform the UE which cell signals DL assignments and UL grants for the serving cell. In the present disclosure, a cell carrying a PDCCH is referred to as a scheduling cell, and a cell where transmission of a PUSCH or a PDSCH is scheduled by DCI included in the PDCCH, that is, a cell carrying the PUSCH or PDSCH scheduled by the PDCCH is referred to as a scheduled cell.

A PDSCH is a physical layer UL channel for UL data transport. The PDSCH carries DL data (e.g., DL-SCH transport block) and is subjected to modulation such as quadrature phase shift keying (QPSK), 16 quadrature amplitude modulation (QAM), 64 QAM, 256 QAM, etc. A codeword is generated by encoding a transport block (TB). The PDSCH may carry a maximum of two codewords. Scrambling and modulation mapping per codeword may be performed and modulation symbols generated from each codeword may be mapped to one or more layers. Each layer is mapped to a radio resource together with a DMRS and generated as an OFDM symbol signal. Then, the OFDM symbol signal is transmitted through a corresponding antenna port.

A PUCCH is a physical layer UL channel for uplink control information (UCI) transmission. The PUCCH carries UCI. UCI types transmitted on the PUCCH include hybrid automatic repeat request acknowledgement (HARQ-ACK) information, a scheduling request (SR), and channel state information (CSI). UCI bits include HARQ-ACK information bits if present, SR information bits if present, link recovery request (LRR) information bits if present, and CSI bits if present. In the present disclosure, HARQ-ACK information bits correspond to an HARQ-ACK codebook. In particular, a bit sequence in which HARQ-ACK information bits are arranged according to a predetermined rule is called an HARQ-ACK codebook.
- Scheduling request (SR): Information that is used to request a UL-SCH resource.
- Hybrid automatic repeat request (HARQ) - acknowledgment (ACK): A response to a DL data packet (e.g., codeword) on the PDSCH. HARQ-ACK indicates whether the DL data packet has been successfully received by a communication device. In response to a single codeword, 1-bit HARQ-ACK may be transmitted. In response to two codewords, 2-bit HARQ-ACK may be transmitted. The HARQ-ACK response includes positive ACK (simply, ACK), negative ACK (NACK), discontinuous transmission (DTX), or NACK/DTX. Here, the term HARQ-ACK is used interchangeably with HARQ ACK/NACK, ACK/NACK, or A/N.
- Channel state information (CSI): Feedback information about a DL channel. The CSI may include channel quality information (CQI), a rank indicator (RI), a precoding matrix indicator (PMI), a CSI-RS resource indicator (CRI), an SS/PBCH resource block indicator (SSBRI), and a layer indicator (L1). The CSI may be classified into CSI part 1 and CSI part 2 according to UCI type included in the CSI. For example, the CRI, RI, and/or the CQI for the first codeword may be included in CSI part 1, and LI, PMI, and/or the CQI for the second codeword may be included in CSI part 2.
- Link recovery request (LRR)

In the present disclosure, for convenience, PUCCH resources configured/indicated for/to the UE by the BS for HARQ-ACK, SR, and CSI transmission are referred to as an HARQ-ACK PUCCH resource, an SR PUCCH resource, and a CSI PUCCH resource, respectively.

PUCCH formats may be defined as follows according to UCI payload sizes and/or transmission lengths (e.g., the number of symbols included in PUCCH resources). In regard to the PUCCH formats, reference may also be made to Table 4.
(0) PUCCH format 0 (PF0 or F0)
   - Supported UCI payload size: up to K bits (e.g., K=2)
   - Number of OFDM symbols constituting a single PUCCH: 1 to X symbols (e.g., X=2)
   - Transmission structure: Only a UCI signal without a DMRS is included in PUCCH format 0. The UE transmits a UCI state by selecting and transmitting one of a plurality of sequences. For example, the UE transmits specific UCI to the BS by transmitting one of a plurality of sequences through a PUCCH, which is PUCCH format 0. The UE transmits the PUCCH, which is PUCCH format 0, in PUCCH resources for a corresponding SR configuration only upon transmitting a positive SR.
   - Configuration for PUCCH format 0 includes the following parameters for a corresponding PUCCH resource: an index for initial cyclic shift, the number of symbols for PUCCH transmission, and/or the first symbol for PUCCH transmission.
(1) PUCCH format 1 (PF1 or F1)
   - Supported UCI payload size: up to K bits (e.g., K=2)
   - Number of OFDM symbols constituting a single PUCCH: Y to Z symbols (e.g., Y=4 and Z=14)
   - Transmission structure: The DMRS and UCI are configured/mapped in TDM in/to different OFDM symbols. In other words, the DMRS is transmitted in symbols in which modulation symbols are not transmitted and the UCI is represented as the product between a specific sequence (e.g., orthogonal cover code (OCC)) and a modulation (e.g., QPSK) symbol. Code division multiplexing (CDM) is supported between a plurality of PUCCH resources (conforming to PUCCH format 1) (within the same RB) by applying cyclic shifts (CSs)/OCCs to both the UCI and the DMRS. PUCCH format 1 carries the UCI of up to 2 bits and the modulation symbols are spread by the OCC (differently configured depending on whether frequency hopping is performed) in the time domain.
   - Configuration for PUCCH format 1 includes the following parameters for a corresponding PUCCH resource: an index for initial cyclic shift, the number of symbols for PUCCH transmission, the first symbol for PUCCH transmission, and/or an index for the OCC.
(2) PUCCH format 2 (PF2 or F2)
   - Supported UCI payload size: more than K bits (e.g., K=2)
   - Number of OFDM symbols constituting a single PUCCH: 1 to X symbols (e.g., X=2)
   - Transmission structure: The DMRS and UCI are configured/mapped using frequency division multiplexing (FDM) within the same symbol. The UE transmits the UCI by applying only IFFT without DFT to encoded UCI bits. PUCCH format 2 carries UCI of a larger bit size than K bits and modulation symbols are subjected to FDM with the DMRS, for transmission. For example, the DMRS is located in symbol indexes #1, #4, #7, and #10 within a given RB with the density of 1/3. A pseudo noise (PN) sequence is used for a DMRS sequence. Frequency hopping may be activated for 2-symbol PUCCH format 2.
   - Configuration for PUCCH format 2 includes the following parameters for a corresponding PUCCH resource: the number of PRBs, the number of symbols for PUCCH transmission, and/or the first symbol for PUCCH transmission.
(3) PUCCH format 3 (PF3 or F3)
   - Supported UCI payload size: more than K bits (e.g., K=2)
   - Number of OFDM symbols constituting a single PUCCH: Y to Z symbols (e.g., Y=4 and Z=14)
   - Transmission structure: The DMRS and UCI are configured/mapped in TDM for/to different OFDM symbols. The UE transmits the UCI by applying DFT to encoded UCI bits. PUCCH format 3 does not support UE multiplexing for the same time-frequency resource (e.g., same PRB).
      Configuration for PUCCH format 3 includes the following parameters for a corresponding PUCCH resource: the number of PRBs, the number of symbols for PUCCH transmission, and/or the first symbol for PUCCH transmission.
(4) PUCCH format 4 (PF4 or F4)
   - Supported UCI payload size: more than K bits (e.g., K=2)
   - Number of OFDM symbols constituting a single PUCCH: Y to Z symbols (e.g., Y=4 and Z=14)
   - Transmission structure: The DMRS and UCI are configured/mapped in TDM for/to different OFDM symbols. PUCCH format 4 may multiplex up to 4 UEs in the same PRB, by applying an OCC at the front end of DFT and applying a CS (or interleaved FDM (IFDM) mapping) to the DMRS. In other words, modulation symbols of the UCI are subjected to TDM with the DMRS, for transmission.
   - Configuration for PUCCH format 4 includes the following parameters for a corresponding PUCCH resource: the number of symbols for PUCCH transmission, length for the OCC, an index for the OCC, and the first symbol for PUCCH transmission.

The table below shows the PUCCH formats. The PUCCH formats may be divided into short PUCCH formats (formats 0 and 2) and long PUCCH formats (formats 1, 3, and 4) according to PUCCH transmission length.

**Table 4**

| PUCCH format | Length in OFDM symbols N^{PUCCH}_{symb} | Number of bits | Usage | Etc. |
|---|---|---|---|---|
| 0 | 1 - 2 | =<2 | HARQ, SR | Sequence selection |
| 1 | 4 - 14 | =<2 | HARQ, [SR] | Sequence modulation |
| 2 | 1 - 2 | >2 | HARQ, CSI, [SR] | CP-OFDM |
| 3 | 4 - 14 | >2 | HARQ, CSI, [SR] | DFT-s-OFDM(no UE multiplexing) |
| 4 | 4 - 14 | >2 | HARQ, CSI, [SR] | DFT-s-OFDM(Pre DFT OCC) |

A PUCCH resource may be determined according to a UCI type (e.g., A/N, SR, or CSI). A PUCCH resource used for UCI transmission may be determined based on a UCI (payload) size. For example, the BS may configure a plurality of PUCCH resource sets for the UE, and the UE may select a specific PUCCH resource set corresponding to a specific range according to the range of the UCI (payload) size (e.g., numbers of UCI bits). For example, the UE may select one of the following PUCCH resource sets according to the number of UCI bits, N_{UCI}.
- PUCCH resource set #0, if the number of UCI bits =< 2
- PUCCH resource set #1, if 2< the number of UCI bits =< N₁
   **...**
- PUCCH resource set #(K-1), if N_{K-2} < the number of UCI bits =< N_{K-1}

Here, K represents the number of PUCCH resource sets (K>1) and Nᵢ represents a maximum number of UCI bits supported by PUCCH resource set #i. For example, PUCCH resource set #1 may include resources of PUCCH formats 0 to 1, and the other PUCCH resource sets may include resources of PUCCH formats 2 to 4 (see Table 4).

Configuration for each PUCCH resource includes a PUCCH resource index, a start PRB index, and configuration for one of PUCCH format 0 to PUCCH format 4. The UE is configured with a code rate for multiplexing HARQ-ACK, SR, and CSI report(s) within PUCCH transmission using PUCCH format 2, PUCCH format 3, or PUCCH format 4, by the BS through a higher layer parameter maxCodeRate. The higher layer parameter maxCodeRate is used to determine how to feed back the UCI on PUCCH resources for PUCCH format 2, 3, or 4.

If the UCI type is SR and CSI, a PUCCH resource to be used for UCI transmission in a PUCCH resource set may be configured for the UE through higher layer signaling (e.g., RRC signaling). If the UCI type is HARQ-ACK for a semi-persistent scheduling (SPS) PDSCH, the PUCCH resource to be used for UCI transmission in the PUCCH resource set may be configured for the UE through higher layer signaling (e.g., RRC signaling). On the other hand, if the UCI type is HARQ-ACK for a PDSCH scheduled by DCI, the PUCCH resource to be used for UCI transmission in the PUCCH resource set may be scheduled by the DCI.

In the case of DCI-based PUCCH resource scheduling, the BS may transmit the DCI to the UE on a PDCCH and indicate a PUCCH resource to be used for UCI transmission in a specific PUCCH resource set by an ACK/NACK resource indicator (ARI) in the DCI. The ARI may be used to indicate a PUCCH resource for ACK/NACK transmission and also be referred to as a PUCCH resource indicator (PRI). Here, the DCI may be used for PDSCH scheduling and the UCI may include HARQ-ACK for a PDSCH. The BS may configure a PUCCH resource set including a larger number of PUCCH resources than states representable by the ARI by (UE-specific) higher layer (e.g., RRC) signaling for the UE. The ARI may indicate a PUCCH resource subset of the PUCCH resource set and which PUCCH resource in the indicated PUCCH resource subset is to be used may be determined according to an implicit rule based on transmission resource information about the PDCCH (e.g., the starting CCE index of the PDCCH).

For UL-SCH data transmission, the UE should include UL resources available for the UE and, for DL-SCH data reception, the UE should include DL resources available for the UE. The UL resources and the DL resources are assigned to the UE by the BS through resource allocation. Resource allocation may include time domain resource allocation (TDRA) and frequency domain resource allocation (FDRA). In the present disclosure, UL resource allocation is also referred to as a UL grant and DL resource allocation is referred to as DL assignment. The UL grant is dynamically received by the UE on the PDCCH or in RAR or semi-persistently configured for the UE by the BS through RRC signaling. DL assignment is dynamically received by the UE on the PDCCH or semi-persistently configured for the UE by the BS through RRC signaling.

On UL, the BS may dynamically allocate UL resources to the UE through PDCCH(s) addressed to a cell radio network temporary Identifier (C-RNTI). The UE monitors the PDCCH(s) in order to discover possible UL grant(s) for UL transmission. The BS may allocate the UL resources using a configured grant to the UE. Two types of configured grants, Type 1 and Type 2, may be used. In Type 1, the BS directly provides the configured UL grant (including periodicity) through RRC signaling. In Type 2, the BS may configure a periodicity of an RRC-configured UL grant through RRC signaling and signal, activate, or deactivate the configured UL grant through the PDCCH addressed to a configured scheduling RNTI (CS-RNTI). For example, in Type 2, the PDCCH addressed to the CS-RNTI indicates that the corresponding UL grant may be implicitly reused according to the configured periodicity through RRC signaling until deactivation.

On DL, the BS may dynamically allocate DL resources to the UE through PDCCH(s) addressed to the C-RNTI. The UE monitors the PDCCH(s) in order to discover possible DL grant(s). The BS may allocate the DL resources to the UE using SPS. The BS may configure a periodicity of configured DL assignment through RRC signaling and signal, activate, or deactivate the configured DL assignment through the PDCCH addressed to the CS-RNTI. For example, the PDCCH addressed to the CS-RNTI indicates that the corresponding DL assignment may be implicitly reused according to the configured periodicity through RRC signaling until deactivation.

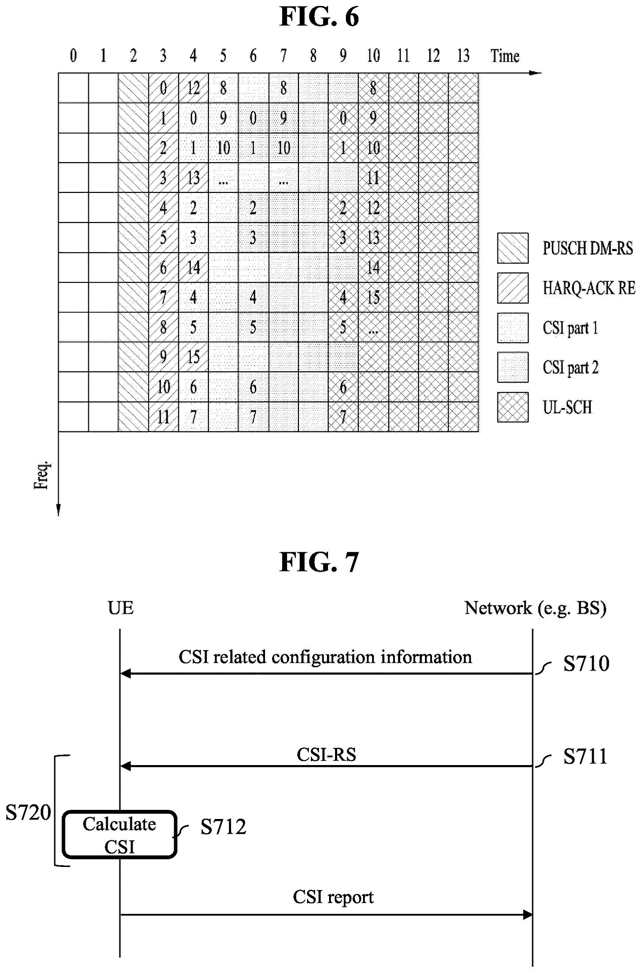

FIG. 6 shows an example of multiplexing UCI to a PUSCH. When PUCCH resources (s) and PUSCH resources overlap each other in a slot and PUCCH-PUSCH simultaneous transmission is not configured, the UCI may be transmitted through the PUSCH as shown in the drawing. Transmitting the UCI through the PUSCH is referred to as UCI piggyback or PUSCH piggyback. FIG. 6 illustrates a case in which HARQ-ACK and channel state information (CSI) are loaded on a PUSCH resource.

### <S1_CSI reporting>

CSI reporting is used for a UE to measure a radio channel state and report the radio channel state to a network. The time and frequency resources to be used by the UE to report CSI are controlled by a BS. In a 3GPP-based system, CSI may include the following indicators/reports: channel quality indicator (CQI), precoding matrix indicator (PMI), CSI-RS resource indicator (CRI), SS/PBCH block resource indicator (SSBRI), layer indicator (LI), rank indicator (RI), layer-1 reference signal reception power (L1-RSRP) or layer-1 signal to interference and noise ratio (L1-SINR).

In 3GPP-based systems (e.g., NR), CSI-RS is used for time and/or frequency tracking, CSI computation, L1-RSRP computation, and mobility management. Here, CSI computation is related to CSI acquisition, and L1-RSRP computation is related to beam management (BM).

The CSI refers to information indicating the quality of a radio channel (or link) formed between the UE and the antenna port(s).

FIG. 7 illustrates a flow of a CSI-related process.

Referring to FIG. 7, the UE may receive configuration information related to CSI from the BS through RRC signaling (S710). The configuration information related to the CSI may include at least CSI interference management (CSI-IM) resource related information, CSI measurement configuration related information, CSI resource configuration related information, CSI-RS resource related information, or CSI report configuration related information.

The CSI resource configuration related information may be represented as CSI-ResourceConfig IE. The CSI resource configuration related information defines a group including at least a non-zero power (NZP) CSI-RS resource set, CSI-IM resource set, or CSI-SSB resource set. That is, the CSI resource configuration related information may include a CSI-RS resource set list, and the CSI-RS resource set list may include at least an NZP CSI-RS resource set list, a CSI-IM resource set list, or a CSI-SSB resource set list. The CSI-RS resource set is identified by a CSI-RS resource set ID, and the CSI-RS resource set includes at least one CSI-RS resource. Each CSI-RS resource is identified by a CSI-RS resource ID.

As shown in the following table, which is an example of NZP-CSI-RS-ResourceSet IE, a parameter indicating the use of CSI-RS for each NZP CSI-RS resource set (e.g., BM-related 'repetition' parameter or tracking-related 'trs-Info' parameter) may be configured.

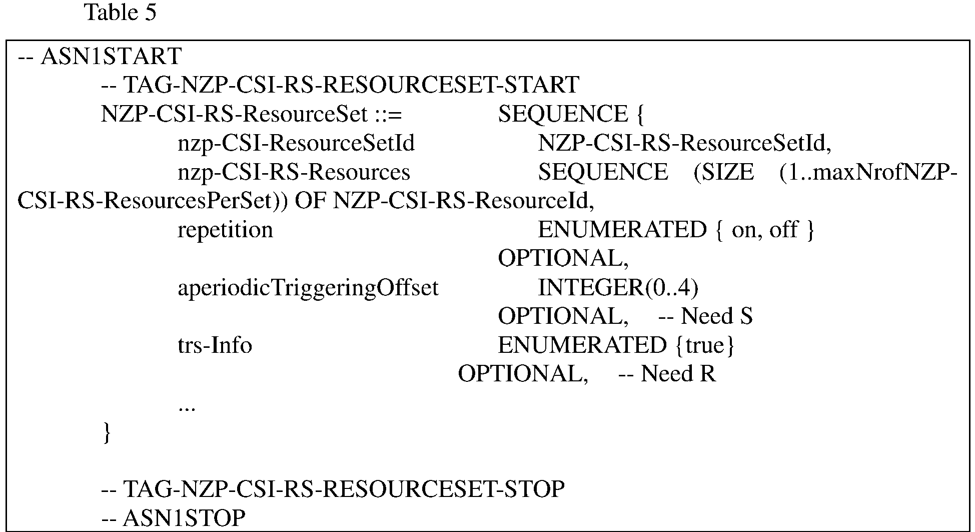

Here, a repetition parameter corresponding to a higher layer parameter corresponds to 'CSI-RS-ResourceRep' of a parameter L1.

CSI report configuration related information includes a parameter reportConfigType indicating a time domain behavior and a parameter reportQuantity indicating CSI related quantity for reporting. The time domain behavior may be periodic, non-periodic or semi-persistent.

The CSI report configuration related information may be represented as CSI-ReportConfig IE and the following tables shows examples of CSI-ReportConfig IE.

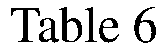

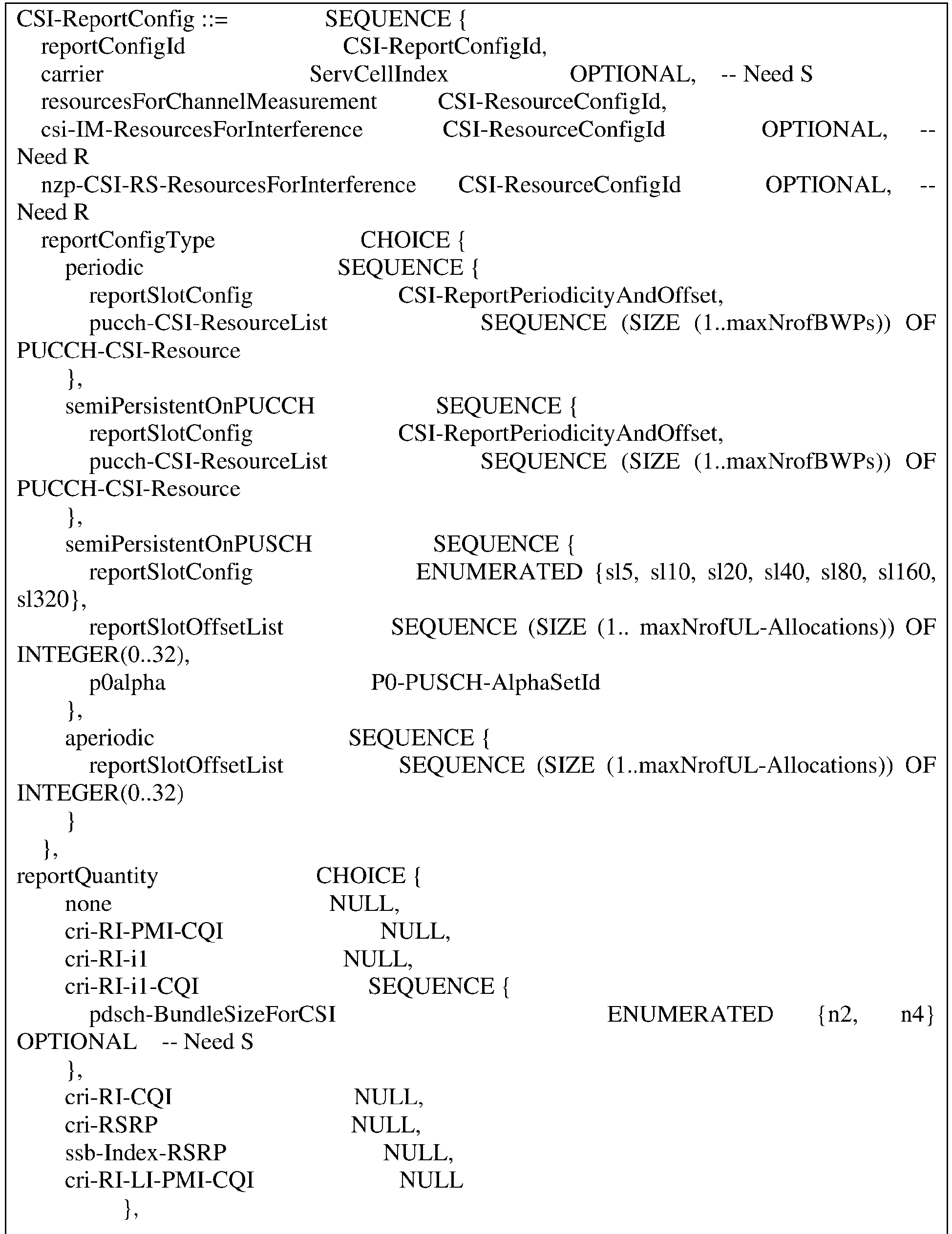

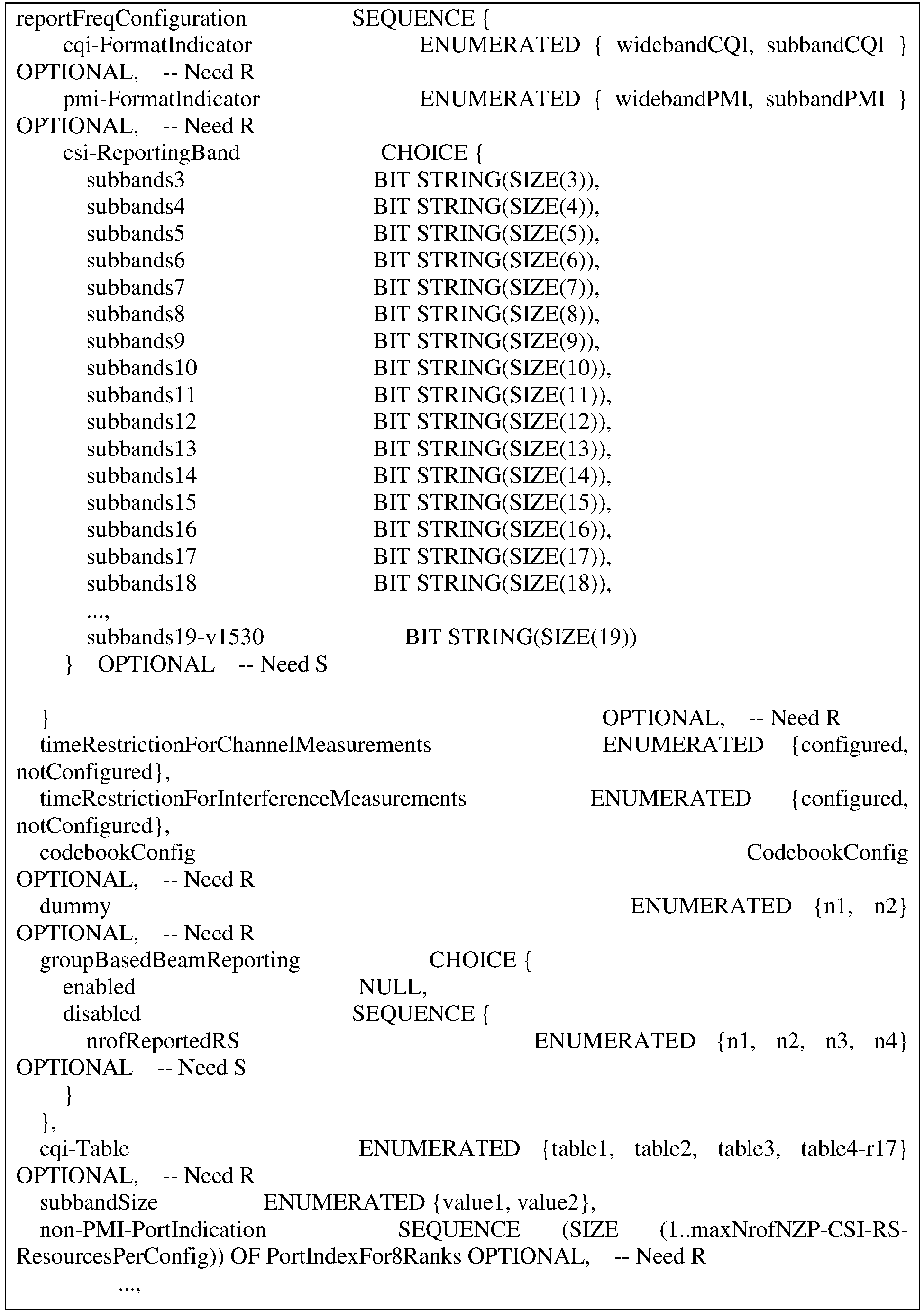

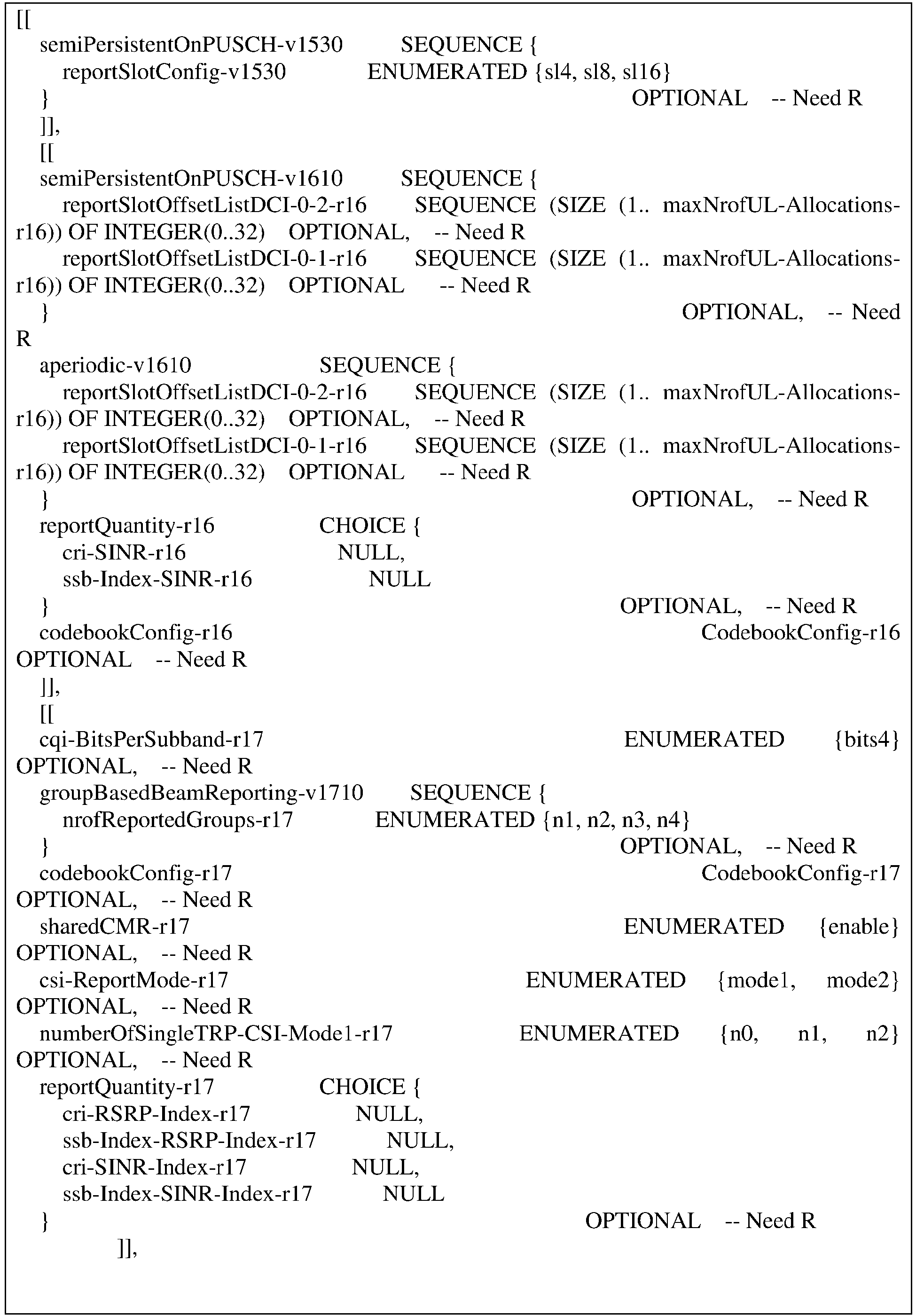

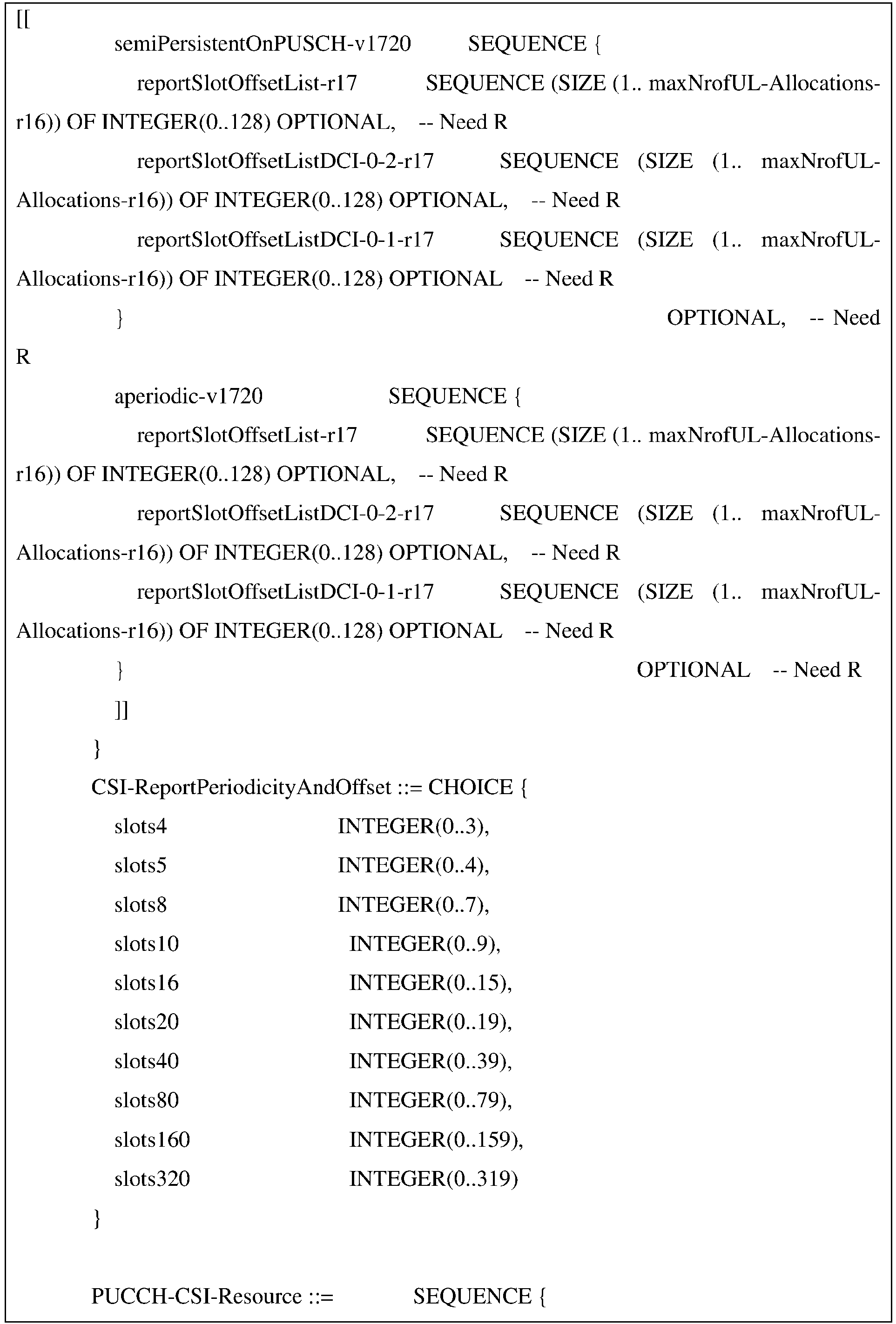

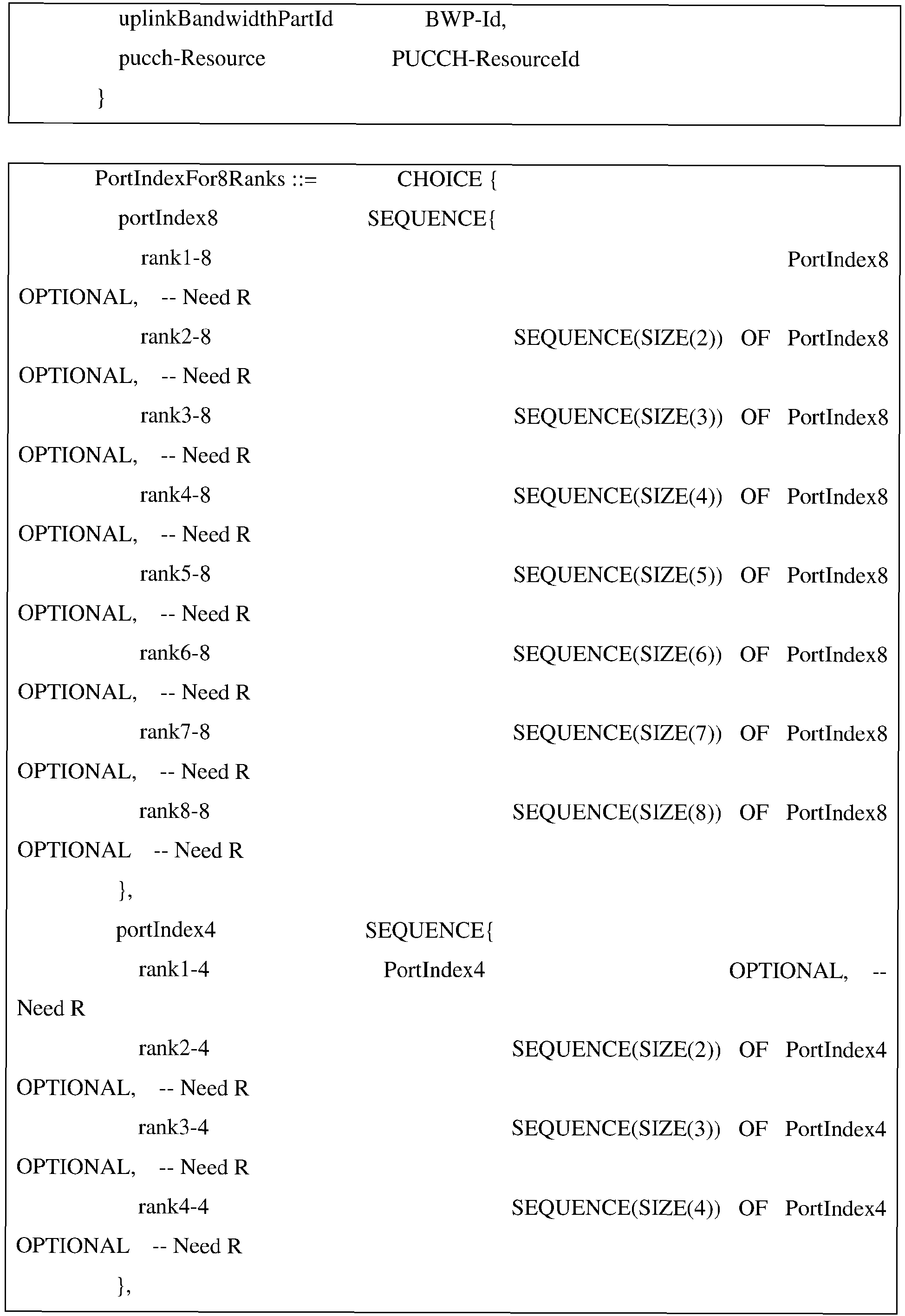

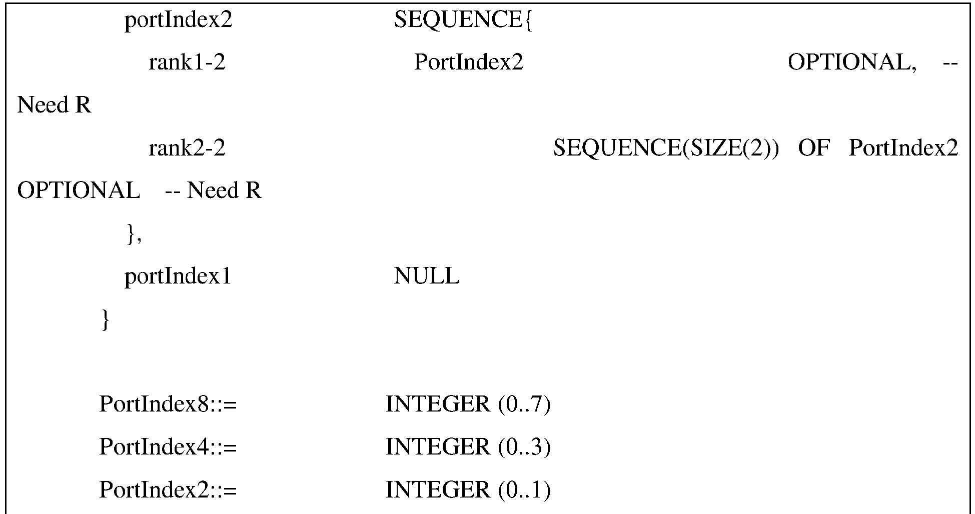

The following tables show examples of *CSI-ResourceConfig* IE, and *CSI-ResourceConfig* IE defines one or more groups among *NZP-CSI-RS-ResourceSet, CSI-IM-ResourceSet,* and/or *CSI-SSB-ResourceSet.*

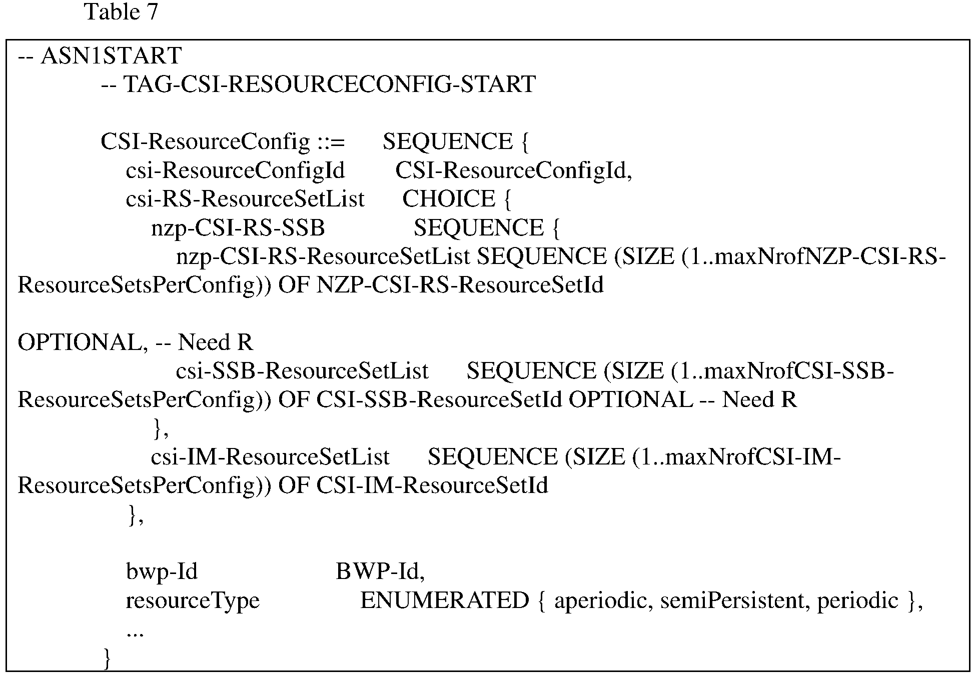

The UE performs CSI measurement based on configuration information related to CSI (S720).

The CSI measurement may include (1) an operation of receiving CSI-RS by the UE (S721), and (2) an operation of performing CSI computation through the received CSI-RS (S722).

In the CSI-RS, resource element (RE) mapping of a CSI-RS resource is configured in the time and frequency domains by a higher layer parameter *CSI-RS-ResourceMapping.* The following shows examples of *CSI-RS-ResourceMapping* IE.

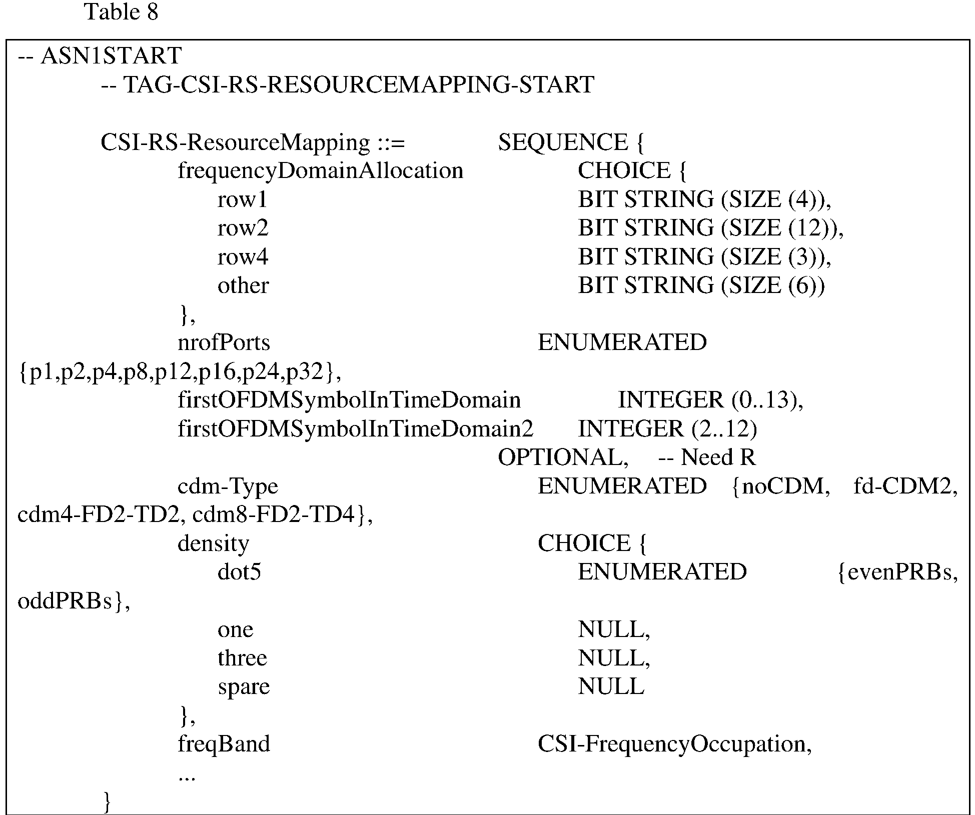

In the table above, density represents the density of CSI-RS resources measured in RE/port/PRB, and nrofPorts represents the number of antenna ports.

The UE may transmit a CSI report based on the computed CSI (S730). Here, when a parameter quantity of CSI-ReportConfig is configured to 'none (or No report)', the UE may omit transmission of the CSI report. However, even when the parameter quantity is configured to 'none (or No report)', the UE may transmit the CSI report to the BS. When the parameter quantity is configured to 'none', this means that an aperiodic tracking reference signal (TRS) is triggered or repetition is configured. Here, only when the repetition is configured to 'ON', transmission of the CSI report may be omitted (refer to Table 5).

### <S1.1_CSI Measurement>

A 3GPP-based system (e.g., NR system) supports more flexible and dynamic CSI measurement and CSI reporting. Here, the CSI measurement may include a process in which the UE receives a CSI-RS and performs CSI computation based on the received CSI-RS to obtain CSI.

As for the time domain behavior of CSI measurement and CSI reporting, aperiodic/semi-persistent/periodic channel measurement (CM) and interference measurement (IM) are supported. A 4-port NZP CSI-RS resource element (RE) pattern may be used to configure CSI-IM.

The BS may transmit precoded NZP CSI-RS to the UE on each port of the configured NZP CSI-RS-based IM resource (IMR).

The UE may assume a channel/interference layer for each port in the CSI-RS resource set and perform interference measurement.

A set of multiple CSI-RS resources may be configured, and the BS or the network may indicate a subset of NZP CSI-RS resources for channel/interference measurement through DCI.

### <S1.1.1_Rresource setting>

Each CSI resource set 'CSI-ResourConfig' includes a configuration of a list of S≥1 CSI resource sets (given by a higher layer parameter *csi-RS-ResourceSetList),* and in this case, the list includes references of one or two of non-zero power (NZP) CS-RS resource set (s) and SS/PBCL block set(s), or the list includes references of CSI interference measurement (CSI-IM) reference set(s). The configuration for S≥1 CSI resource sets include each CSI resource set including CSI-RS resources (including NZP CSI-RS or CSI-IM) and a SS/PBCH block (SSB) resource used in L1-RSRP computation.

The time domain behavior of the CSI-RS resource(s) within the CSI resource setting included in the CSI-ResourceConfig IE is indicated by a higher layer parameter *resourceType,* and may be configured to be aperiodic, periodic, or semi-persistent. For periodic and semi-persistent CSI resource settings, the number S of configured CSI-RS resource sets is limited to '1'. For periodic and semi-persistent CSI resource settings, the configured periodicity and slot offset are determined based on a numerology (e.g., subcarrier spacing) of the related DL BWP, given by bwp-id.

When the UE is configured to a plurality of CSI-resourceConfigs including the same NZP CSI-RS resource ID, the same time domain behavior is configured for CSI-ResourConfig.

When the UE is configured to a plurality of CSI-resourceConfigs including the same CSI-IM resource ID, the same time domain behavior is configured for CSI-ResourConfig.

### <S1.1.2_Resource setting configuration>

As described above, CSI resource settings may be provided by a list of CSI resource sets. For aperiodic CSI, each trigger state, configured using a higher layer parameter CSI-AperiodicTriggerState, means that each CSI-ReportConfig is related to one or more CSI-ReportConfig linked with periodic, semi-persistent, or aperiodic settings. One report setting may be connected to up to three resource settings.

### <S.1.1.3_CSI computation>

When interference measurement is performed on CSI-IM, each CSI-RS resource for channel measurement is related to a CSI-IM resource for each resource in the order of the CSI-RS resource and the CSI-IM resource within the corresponding resource sets. The number of CSI-RS resources for channel measurement is the same as the number of CSI-IM resources. For CSI measurement, the UE assumes the following.
- Each NZP CSI-RS port configured for interference measurement corresponds to an interference transmission layer.
- All interference transmission layers on NZP CSI-RS ports for interference measurement consider the associated energy per resource element (EPRE) ratios.
- Other interference signals on resource elements of NZP CSI-RS resource for channel measurement, NZP CSI-RS resource for interference measurement, or CSI-IM resource for interference measurement.

For L1-SINR with dedicated interference measurement resources, the UE assumes the following:

Total received power on the dedicated NZP CSI-RS resource for interference measurement or dedicated CSI-IM resource for interference measurement corresponds to interference and noise.

### <S1.2_CSI Report>

The time and frequency resources to be used by the UE to report CSI are controlled by a BS.

The CSI may include at least one of a channel quality indicator (CQI), a precoding matrix indicator (PMI), a CSI-RS resource indicator (CRI), an SS/PBCH block resource indicator (SSBRI), a layer indicator (LI), a rank indicator (RI), or L1-RSRP.

For CQI, PMI, CRI, SSBRI, LI, RI, and L1-RSRP, the UE is configured by a list of N≥1 CSI-ReportConfig reporting setting, M≥1 CSI-ResourceConfig resource setting, or one or more trigger states (e.g., higher layer parameter *aperiodicTriggerStateList* and *semiPersistentOnPUSCH-TriggerStateList).* In the *aperiodicTriggerStateList,* each trigger state includes a related *CSI-ReportConfigs* list indicating a channel and optionally resource set IDs for interferene. In the *semiPersistentOnPUSCH-TriggerStateList,* each trigger state may include one related *CSI-ReportConfig.*

The time domain behavior of CSI reporting supports periodic, semi-persistent, and aperiodic.
i) Periodic CSI reporting is performed on a short PUCCH and a long PUCCH. The periodicity and slot offset of periodic CSI reporting may be configured via RRC and *CSI-ReportConfig* IE may be referenced.
ii) Semi-persistent (SP) CSI reporting is performed on a short PUCCH, a long PUCCH, or a PUSCH. In the case of SP CSI on the short/long PUCCH, the periodicity and the slot offset are configured via RRC, and activation/deactivation of CSI report is performed on a separate MAC control element (CE). In the case of SP CSI on the PUSCH, the periodicity of SP CSI reporting is configured via RRC, but the slot offset is not configured via RRC, and SP CSI reporting is activated/deactivated by DCI (e.g., DCI format 0_1). For SP CSI reporting on the PUSCH, a separate RNTI (e.g., SP-CSI C-RNTI) may be used. First CSI report timing complies with a PUSCH time domain assignment value indicated by the DCI, and subsequent CSI report timing complies with periodicity configured via RRC. DCI format 0_1 may include a CSI request field and activate/deactivate a specific configured SP-CSI trigger state. SP CSI reporting may be activated/deactivated in the same or similar manner as a mechanism with data transmission on the SPS PUSCH.
iii) Aperiodic (AP) CSI reporting may be performed on the PUSCH and may be triggered by DCI. In this case, information related to trigger of aperiodic CSI reporting may be delivered/instructed/configured through a MAC CE. In the case of AP CSI with AP CSI-RS, AP CSI-RS timing may be configured by RRC, and timing for AP CSI reporting may be dynamically controlled by DCI.

A method of dividing and reporting CSI in a plurality of reporting instances applied to PUCCH-based CSI report in LTE (e.g., transmitting in the order of RI, WB PMI/CQI, and SB PMI/CQI) is not applied in NR. Instead, the NR is limited from configuring specific CSI report in the short/long PUCCH, and a CSI omission rule is defined. With respect to AP CSI reporting timing, the PUSCH symbol/slot location is dynamically indicated by DCI. Candidate slot offsets may be configured by RRC. For CSI reporting, slot offset Y may be configured per reporting setting. For UL-SCH, slot offset K2 may be configured separately.

Two CSI latency classes (e.g., low latency class or high latency class) may be defined in terms of CSI computation complexity. Low latency CSI is wideband (WB) CSI including up to 4 ports Type-I codebook or up to 4 ports non-PMI feedback CSI. High latency CSI refers to any CSI other than low latency CSI. For a normal UE, (Z, Z') is defined as a unit of OFDM symbols. Here, Z represents a minimum CSI processing time until CSI reporting is performed after aperiodic CSI triggering DCI is received. Z' represents a minimum CSI processing time until CSI reporting is performed after CSI-RS for channel/measurement is received.

The UE may report the number of CSIs to be calculated simultaneously.

The UE calculates the CSI parameters (if reported) assuming the following dependencies between the CSI parameters (if reported).
- LI is calculated conditioned on the reported CQI, PMI, RI and CRI.
- CQI is calculated conditioned on the reported PMI, RI, and CRI.
- PMI is calculated based on reported RI and CRI.
- RI is calculated based on the reported CRI.

Reporting settings for CSI may be aperiodic (using PUSCH), periodic (using PUCCH), or semi-persistent (using PUCCH and DCI activated PUSCH). CSI-RS resources may be periodic, semi-persistent, or aperiodic. The semi-persistent CSI-RS may be activated and deactivated as described in section 5.2.1.5.2 of 3GPP TS 38.214, and aperiodic CSI-RS may be configured and triggered/activated as described in section 5.2.1.5.1 of 3GPP TS 38.214. The following table illustrating the triggering/activation for possible CSI-RS configurations shows the supported combinations of CSI reporting configurations and CSI-RS resource configurations and how the CSI reporting is triggered on each CSI-RS resource configuration.

**Table 9**

| **CSI-RS Configuration** | **Periodic CSI Reporting** | **Semi-Persistent** CSI **Reporting** | **Aperiodic CSI Reporting** |
|---|---|---|---|
| Periodic CSI-RS | No dynamic triggering/activation | For reporting on PUCCH, the UE receives an activation command [10, TS 38.321]; for reporting on PUSCH, the UE receives triggering on DCI | Triggered by DCI; additionally, activation command [10, TS 38.321] possible as defined in Subclause 5.2.1.5.1. |
| Semi-Persistent CSI-RS | Not Supported | For reporting on PUCCH, the UE receives an activation command [10, TS 38.321]; for reporting on PUSCH, the UE receives triggering on DCI | Triggered by DCI; additionally, activation command [10, TS 38.321] possible as defined in Subclause 5.2.1.5.1. |
| Aperiodic CSI-RS | Not Supported | Not Supported | Triggered by DCI; additionally, activation command [10, TS 38.321] possible as defined in Subclause 5.2.1.5.1. |

The following table shows information related to activation/deactivation/triggering by MAC CE related to semi-persistent/aperiodic CSI reporting defined in 3GPP TS 38.321.

**Table 10**

| | | |
|---|---|---|
| **5.18.2 Activation/Deactivation of Semi-persistent CSI-RS/CSI-IM resource set** | | |
| The network may activate and deactivate the configured Semi-persistent CSI-RS/CSI-IM resource sets of a Serving Cell by sending the SP CSI-RS/CSI-IM Resource Set Activation/Deactivation MAC CE described in subclause 6.1.3.12. The configured Semi-persistent CSI-RS/CSI-IM resource sets are initially deactivated upon configuration and after a handover. | | |
| The MAC entity shall: | | |
| | 1> if the MAC entity receives an SP CSI-RS/CSI-IM Resource Set Activation/Deactivation MAC CE on a Serving Cell: | |
| | | 2> indicate to lower layers the information regarding the SP CSI-RS/CSI-IM Resource Set Activation/Deactivation MAC CE. |
| **5.18.3 Aperiodic CSI Trigger State subselection** | | |
| The network may select among the configured aperiodic CSI trigger states of a Serving Cell by sending the Aperiodic CSI Trigger State Subselection MAC CE described in subclause 6.1.3.13. | | |
| The MAC entity shall: | | |
| | 1> if the MAC entity receives an Aperiodic CSI trigger State Subselection MAC CE on a Serving Cell: | |
| | | 2> indicate to lower layers the information regarding Aperiodic CSI trigger State Subselection MAC CE. |

### <S2. Multi-Transmission/Reception Point (TRP) related operation>

An M-TRP transmission method in which M TRPs transmit data to one UE is largely divided into two types: eMBB M-TRP transmission, which is a method to increase a transmission rate, and URLLC M-TRP transmission, which is a method to increase a reception success rate and reduce latency.

### <S2.1_Description related to MTRP URLLC>

In some implementations of the present disclosure, DL MTRP-URLLC means that multiple TRPs transmit the same data/DCI by using different layer/time/frequency resources. For example, TRP 1 transmits the same data/DCI on resource 1 and TRP 2 transmits the same data/DCI on resource 2. A UE configured with the DL MTRP-URLLC transmission method receives the same data/DCI by using different layer/time/frequency resources. In this case, a UE receives an instruction from a BS on which quasi-co-location (QCL) RS/type (i.e. DL transmission configuration indication (TCI) state) needs to be used in the layer/time/frequency resource in which the same data/DCI is received. For example, when the same data/DCI is received on resource 1 and resource 2, the DL TCI state used by resource 1 and the DL TCI state used by resource 2 are indicated. The UE may receive the same data/DCI through Resource 1 and Resource 2 and thus achieve high reliability. This DL MTRP URLLC may be applied to PDSCH/PDCCH.

Conversely, UL MTRP-URLLC means that multiple TRPs receive the same data/UCI from one UE by using different layer/time/frequency resources. For example, TRP 1 receives the same data/UCI from the UE on resource 1, and TRP 2 receives the same data/UCI from the UE on resource 2 and then shares the received data/UCI through a backhaul link between the TRPs. A UE configured with the UL MTRP-URLLC transmission method transmits the same data/UCI by using different layer/time/frequency resources. In this case, the UE receives an instruction from the BS on which transmission (Tx) beam and which Tx power (i.e., UL TCI state) to use in the layer/time/frequency resource in which the same data/UCI is transmitted. For example, when the same data/UCI is transmitted on resource 1 and resource 2, the UL TCI state used by resource 1 and the UL TCI state used by resource 2 are indicated. This UL MTRP URLLC may be applied to PUSCH/PUCCH.

### <S2.2_Description related to SDCI or MDCI based MTRP transmission>

In terms of DCI transmission, the multiple TRP (M-TRP) transmission method may be classified into i) multiple DCI (M-DCI)-based M-TRP transmission in which each TRP transmits different DCI and ii) single DCI (S-DCI)-based M-TRP transmission in which one TRP transmits DCI. For example, in the case of S-DCI, all scheduling information for data transmitted by an M-TRP needs to be transmitted through one DCI, and thus the S-DCI may be used in an ideal backhaul environment in which dynamic cooperation between two TRPs is possible.

### <S2.3_Description related to R16 NR MTRP>

In the R16 NR standard, S-DCI-based MTRP PDSCH and M-DCI-based MTRP PDSCH transmission methods are supported.
- R16 S-DCI-based MTRP PDSCH

S-DCI-based MTRP PDSCH transmission is further divided and one of spatial division multiplexing (SDM)/frequency division multiplexing (FDM)/time division multiplexing (TDM) may be used. In the case of SDM, one transport block (TB) is transmitted in multi-layers, but layers belonging to different DMRS code division multiplexing (CDM) groups are transmitted through different Tx beams (i.e., QCL RS or TCI state). As a result, transmission capacity may be increased by increasing the number of layers compared to the existing single TRP (STRP) transmission method. When one TB is transmitted in multiple layers, some layer(s) are transmitted to TRP 1 and the remaining layer(s) are transmitted to TRP 2, thereby improving channel reliability due to diversity gain.

For FDM, two schemes, schemes 2a and 2b, are supported. Scheme 2a transmits one TB to multi-RB, but transmits RBs belonging to different RB groups through different Tx beams (i.e., QCL RS or TCI state). Scheme 2b transmits the same TB to different RB groups, but transmits RBs belonging to different RB groups through different Tx beams (i.e., QCL RS or TCI state). For TDM, two schemes, schemes 3 and 4, are supported. Scheme 4 (=interslot TDM) is a method that repeatedly transmits the same TB in multiple slots, but transmits slots belonging to different slot groups with different Tx beams (i.e., QCL RS or TCI state). In contrast, Scheme 3 (=intraslot TDM) is a method that repeatedly transmits the same TB in several OFDM symbol groups, but transmits some OFDM symbol group(s) and the remaining OFDM symbol group(s) on different Tx beams (i.e., QCL RS or TCI state).
- R16 M-DCI-based MTRP PDSCH

M-DCI-based MTRP PDSCH transmission is a method in which each TRP schedules and transmits a PDSCH through DCI. That is, TRP 1 transmits PDSCH 1 through DCI 1 and TRP 2 transmits PDSCH 2 through DCI 2. When PDSCH 1 and PDSCH 2 overlap on the same frequency and time resource, two PDSCHs are received by the UE for the same resource element (RE), thereby increasing resource efficiency and increasing transmission capacity. To this end, in the R16 standard, a CORESET pool, which is a group of several control resource sets (CORESET) is introduced, and TRP 1 transmits a PDCCH through the CORESET belonging to CORESET pool 0 and also transmits the PDSCH scheduled by the PDCCH. TRP 2 transmits the PDCCH through CORESET belonging to CORESET pool 1, and also transmits the PDSCH scheduled by the corresponding PDCCH. The PUSCH may also be scheduled by a specific TRP to transmit PUSCH to the UE through CORESET belonging to each COERSET pool. For PUCCHs, some PUCCH resource(s) are scheduled by TRP 1 and receive UCI, and the remaining PUCCH resource(s) are scheduled by TRP 2 and receive UCI. In the case of a PUSCH or a PUCCH, the channels scheduled/used by each TRP are TDMed with each other and do not overlap each other, and thus an increase in transmission capacity may not be expected, but the UE may transmit independent PUSCH/PUCCH for each of TRPs 1 and 2.

The UE may recognize the PUSCH (or PUCCH) scheduled by the DCI received through different CORESETs (or CORESETs belonging to different CORESET groups) as a PUSCH (or PUCCH) transmitted to different TRPs, or PUSCHs (or PUCCHs) of different TRPs. A method for UL transmission (e.g., PUSCH/PUCCH) transmitted to different TRPs may also be applied to UL transmission (e.g., PUSCH/PUCCH) transmitted to different panels belonging to the same TRP.

The CORESET group ID (or COERSET pool index with the same meaning) described/mentioned in the present disclosure may mean an index / identification information (e.g. ID) for distinguishing CORESET for each TRP/panel. The CORESET group may be an index / identification information (e.g. ID) to distinguish the CORESET for each TRP panel / group / union of the CORESETs distinguished by the CORESET group ID. For example, CORESET group ID may be specific index information defined within CORESET configuration. For example, a CORESET group may be configured/indicated/defined by an index defined within the CORESET configuration for each CORESET. The CORESET group ID may mean an index / identification information / indicator for distinction / identification between CORESETs configured / related to each TRP / panel, and the CORESET group ID described / mentioned in the present disclosure may be replaced and expressed with a specific index / specific identification information / specific indicator for distinction / identification between CORESETs configured/related to each TRP/panel. The CORESET group ID, that is, a specific index / specific identification information / specific indicator for distinguishing / identifying between CORESETs configured / related with each TRP / panel, may be configured/indicated through higher layer signaling (e.g. RRC signaling) / L2 signaling (e.g. MAC control element (CE)) / L1 signaling (e.g. DCI). For example, PDCCH detection may be configured/instructed to be performed for each TRP/panel in units of corresponding CORESET groups, and/or uplink control information (e.g. CSI, HARQ-ACK, and SR) and/or uplink physical channels (e.g., PUCCH/PRACH/SRS resources) for each TRP/panel in units of corresponding CORESET groups may be configured/instructed to be managed/controlled separately, and/or HARQ-ACK (process/retransmission) for PDSCH/PUSCH scheduled for each TRP/panel may be managed in units of corresponding CORESET groups.

For example, ControlResourceSet control element (information element (IE)) as a higher layer parameter is used to configure time/frequency control resource set (CORESET). For example, the control resource set (CORESET) may be related to detection and reception of downlink control information. The ControlResourceSet IE may include CORESET-related ID (e.g., controlResourceSetID)/index of CORESET pool for CORESET (e.g., CORESETPoolIndex)/time/frequency resource configuration of CORESET/TCI information related to CORESET. For example, the index of the CORESET pool (e.g. CORESETPoolIndex) may be configured to 0 or 1. In the above description, the CORESET group may correspond to the CORESET pool, and the CORESET group ID may correspond to the CORESET pool index (e.g., CORESETPoolIndex). ControlResourceSet(i.e. CORESET) may be configured through higher layer signaling (e.g. RRC).

### <S2.4_Description related to R17 NR MTRP transmission>

In the R17 NR standard, MTRP PDCCH repetitive transmission, MTRP PDCCH/PDSCH SFN transmission, S-DCI-based MTRP PUSCH repetitive transmission, and single PUCCH resource-based MTRP PUCCH repetitive transmission are supported. In all of the corresponding transmission schemes, the same content (i.e., DCI or UL transport block (TB) or UCI) is repeatedly transmitted with URLLC target enhancement to increase reliability. In the case of MTRP PDCCH repetitive transmission, the MTRP PDCCH is TDMed or FDMed and is repeatedly transmitted, MTRP PDCCH/PDSCH SFN is repeatedly transmitted at the same time/frequency/layer, in the case of S-DCI-based MTRP PUSCH repetitive transmission, the MTRP PUSCH is TDMed, and in the case of single PUCCH resource-based MTRP PUCCH, the MTRP PUCCH may be TDMed and is repeatedly transmitted.
- R17 S-DCI-based MTRP PDCCH repetitive transmission

In the R17 NR standard, for MTRP PDCCH repetitive transmission, a plurality of CORESETs with different TCI states (i.e., different QCL RSs) are configured to the UE, and a plurality of SS sets each connected to the corresponding CORESETs are configured. The BS may indicate/configure to the UE that the SS set connected to one CORESET and the SS set connected to another CORESET are linked for repetitive transmission, and thus the UE may know that the PDCCH candidates of the corresponding SS set are repeatedly transmitted.

For example, two CORESETs, CORESETs 0 and 1, may be configured to the UE, CORESETs 0 and 1 may be connected to SS sets 0 and 1, respectively, and SS sets 0 and 1 may be linked with each other. The UE may know that the PDCCH candidate in SS set 0 and the PDCCH candidate in SS set 1 repeatedly transmit the same DCI and know that a specific PDCCH candidate in SS set 0 and a specific PDCCH candidate in SS set 1 are a pair configured for repetitive transmission of the same DCI through a specific rule. These two PDCCH candidates are called linked PDCCH candidates, and the UE may successfully decode the corresponding DCI when correctly receiving either of the two PDCCH candidates. However, the linked PDCCH candidates are received through different beams by using the QCL RS (i.e., DL beam) in the TCI state of COERSET 0 connected to SS set 0 when receiving the PDCCH candidate of SS set 0 and the QCL RS (i.e., DL beam) in the TCI state of COERSET 1 connected to SS set 1 when receiving the PDCCH candidate of SS set 1.
- R17 MTRP SFN PDCCH

As a special case of MTRP PDCCH repetitive transmission, multiple TRPs may repeatedly transmit the same DCI through the same time/frequency/DMRS port, and this may be referred to as single frequency network (SFN) PDCCH transmission. However, for SFN PDCCH transmission, the BS configures multiple TCI states in one CORESET instead of configuring multiple CORESETs with different TCI states. When the UE receives a PDCCH candidate through the SS set connected to one CORESET, the performs channel estimation of the PDCCH DMRS by using all of the plurality of TCI states and attempts decoding.
- R17 MTRP SFN PDSCH

During the MTRP PDSCH repetitive transmission, two TRPs repeatedly transmit the corresponding channel on different resources. However, as a special case, when the resources used by the two TRPs are the same, that is, when the same channel is repeatedly transmitted through the same frequency, time, and layer (=DMRS port), the reliability of the channel may be improved. In this case, the resources of the same channel that are repeatedly transmitted are not differentiated and are received together over the air, and thus the same channel may be recognized as one channel in terms of a receiving end. In the R17 NR standard, two DL TCI states may be configured to receive a PDSCH DMRS for PDSCH SFN transmission.
- R17 S-DCI-based MTRP PUSCH repetitive transmission

In the R17 NR standard, the BS configures two SRS sets to the UE for S-DCI-based MTRP PUSCH transmission, and each set is used to indicate the UL Tx port and UL beam/QCL information toward TRP 1 and TRP 2. The BS may perform SRS resource indication (SRI) for each SRS set through two SRI fields in one DCI and indicate up to two power control (PC) parameter sets. For example, a first SRI field may indicate the SRS resource and PC parameter set defined in set 0, and a second SRI field may indicate the SRS resource and PC parameter set defined in set 1. The UE is instructed to receive the UL Tx port, PC parameter set, and UL beam/QCL information toward TRP 1 through the first SRI field, and through this, performs PUSCH transmission in a transmission occasion (TO) corresponding to set 0. Similarly, the UE is instructed to receive the UL Tx port, PC parameter set, and UL beam/QCL information toward TRP 2 through the second SRI field, and through this, performs PUSCH transmission in a TO corresponding to set 1. The existing one field is expanded into two fields to indicate precoding information and number of layers (TPMI), phase tracking reference signal (PTRS), and transmission power control (TPC) fields in addition to the SRI field. STRP PUSCH repetitive transmission may be performed by introducing a 2-bit SRS resource set indication field and selecting a specific one of two SRS sets, and MTRP PUSCH repetitive transmission may be by selecting both. That is, when a corresponding field is 00 and 01, STRP PUSCH transmission corresponding to each set is performed by indicating SRS set 0 and SRS set 1, respectively, when the field is 10, (SRS set 0, SRS set 1) is indicated to perform MTRP PUSCH transmission in the order in which a set pair is indicated. That is, set 0 corresponds to a first PUSCH TO. In the case of 11, (SRS set 1, SRS set 0) is indicated and MTRP PUSCH transmission is performed in the order in which the set pair is indicated. That is, set 1 corresponds to the first PUSCH TO.
- R17 single PUCCH resource-based MTRP PUCCH repetitive transmission

In the R17 NR standard, for MTRP PUCCH transmission based on a single PUCCH resource, the BS activates/configures two spatial relation information on a single PUCCH resource to the UE (in the case of FR1, two power control (PC) parameter sets are activated/configured), and when the UE transmits UL UCI through the corresponding PUCCH resource, each spatial relation information is used to indicate spatial relation information toward TRP 1 and TRP 2. For example, through a value indicated in first spatial relation information, the UE receives an instruction for Tx beam/PC parameters directed toward TRP 1 and performs PUCCH transmission in a TO corresponding to TRP 1 by using this information. Similarly, through a value indicated in second spatial relation information, the UE receives an instruction for Tx beam/PC parameters directed toward TRP 2 and performs PUCCH transmission in a TO corresponding to TRP 2 by using this information.

In the Rel 17 standardization meeting, for MTRP PUCCH repetitive transmission, a configuration method is enhanced such that two sets of spatial relation information may be configured in the PUCCH resource. That is, when PC parameters such as PLRS, Alpha, P0, and closed loop index are configured in each spatial relationship information, a spatial relation RS may be configured. As a result, PC information and spatial relation RS information corresponding to two TRPs may be configured through two sets of spatial relation information, and the UE transmits information on a PUCCH by using the first spatial relation information in TO 1 and transmit information by using the second spatial relation information in TO 2 on the same UCI (i.e. CSI, ACKNAK, and SR) PUCCH. Hereinafter, a PUCCH resource with two sets of spatial relation information is referred to as an MTRP PUCCH resource, and a PUCCH resource with one set of spatial relation information is referred to as a STRP PUCCH resource.

### <S3. Network Energy Saving (NES)>

BS energy saving may contribute to building an eco-friendly network by reducing carbon emissions and reducing the operational expenditure (OPEX) of communication operators, and may be considered important in wireless communication systems, including 3GPP. In particular, as a high transmission rate is required due to introduction of 5G communications, BSs need to include a greater number of antennas and provide services through wider bandwidth and frequency bands. Thus, energy costs of the BS reach a level of 20 % of total OPEX according to recent study. Due to this increased interest in BS energy savings, a new study item called "study on network energy savings" is approved in 3GPP NR release 18. For example, to improve the energy-saving capabilities of the BS in terms of transmission and reception, the corresponding study investigates how to achieve more efficient operation of transmission and/or reception dynamically and/or adaptation semi-statically and with finer granularity by using one or more network energy saving technology in the time, frequency, space and power domains using potential resource/feedback and potential UE assistance information of the UE.

Hereinafter, some implementations of the present disclosure of selecting information to be included in a CSI report from among a plurality of configurations by the UE when the BS requests a CSI report for preconfigured adaptation configurations from the UE for saving energy through spatial (e.g., antenna element) and power (e.g., DL power) domain adaptation will be described.

In mmW, a wavelength becomes shorter, making it possible to install multiple antennas in the same area. That is, in a band of 30 GHz, a wavelength is 1 cm, and thus a total of 100 antenna elements may be installed in a 2-dimensional array at 0.5 lambda (wavelength) intervals on a panel of 5 by 5 cm. Therefore, in mmW, multiple antenna elements are used to increase beamforming (BF) gain to increase coverage or increase throughput. In this case, independent beamforming for each frequency resource is possible when a transceiver unit (TXRU) is installed to adjust transmission power and phase for each antenna element. However, installing TXRU on all 100 antenna elements has a problem of being less effective in terms of price. Therefore, a method of mapping multiple antenna elements to one TXRU and controlling a beam direction with an analog phase shifter is considered. This analog beamforming method has a disadvantage of being unable to provide frequency-selective beamforming because only one beam direction is generated in an entire band. A hybrid BF with B TXRUs, which is less than Q antenna elements, may be considered as an intermediate form between digital BF and analog BF. In this case, there are differences depending on a connection method of B TXRUs and Q antenna elements, but the beam directions in which simultaneous transmission is possible may be limited to B or less.

In the present disclosure, a scenario in which the BS receives a CSI report for multiple antenna ports (AP) and/or multiple power offsets at once and adjusts the number of APs to be used (ON/OFF some of antenna elements/transceiver units (TxRU) connected to the AP) when transmitting a downlink signal/channel to the UE or adjusts transmission power to obtain NES gain is mainly considered. When the BS is capable of reducing the number of APs or reduce transmission power based on the CSI reported by the UE, energy saving (ES) gain may be obtained through unnecessary antenna elements (AE) or adjustment of transmission power. For example, the BS may include one CSI-RS resource or multiple CSI-RS resources within the CSI-RS resource set, and for each CSI-RS resource set or each CSI-RS resource within the CSI-RS resource set, CSI and/or CSI for multiple CSI-RS to PDSCH power offset values (e.g., -3 dB or 0 dB) assuming plural numbers of APs (e.g., 64 APs and 32 APs) may be configured to be included in one CSI report and reported, and the optimal number of APs and PDSCH transmission power/modulation and coding scheme (MCS) may be determined based on the information in the CSI report to help reduction of power consumption.

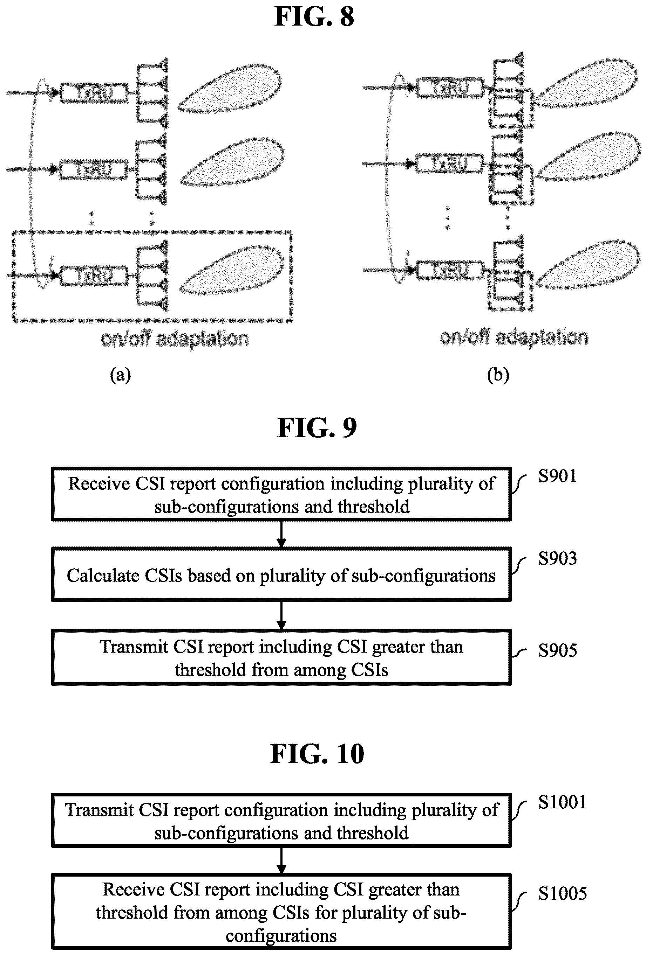

FIG. 8 illustrates spatial elements adaptation. In particular, FIG. 8(a) illustrates type-1 spatial elements adaptation and FIG. 8(b) illustrates type-2 spatial elements adaptation.

Referring to FIG. 8(a), Type-1 spatial elements adaptation enables/disables all spatial elements, and the number of logical ports is reduced after shutdown, but a beam of each logical port (e.g. CSI-RS beam) remains the same.

Referring to FIG. 8(b), Type-2 spatial elements adaptation enables/disables some of the spatial elements, and when spatial elements are OFF, the number of logical ports remains the same due to port virtualization, but there are fewer spatial elements to be beamformed by the BS, and thus a beam (e.g., CSI-RS beam) of each logical port may be widened.

However, the amount of resources allocated for the CSI report may be insufficient to include all CSIs corresponding to multiple antenna ports (AP) and/or power offset values in one CSI report, and a discrepancy may occur between a UCI payload size assumed during decoding of the BS and a UCI payload size transmitted by the UE.

Hereinafter, some implementations of the present disclosure of a method of selecting CSI(s) to be included in the CSI report according to a preconfigured rule/configuration when the UE reports a plurality of CSIs corresponding to multiple APs and/or power offset values through one CSI report will be described.

Hereinafter, an operation in which the BS operates in a network energy saving (NES) mode for energy saving (ES) may mean that, for example, an operation in which the BS obtains power consumption of the BS and the UE by configuring a plurality of OFF sections (i.e., discontinuous transmission (DTX) sections of the BS) in which transmission of a specific DL signal during a pre-specific time section is turned off, indicating one OFF section from among the OFF sections dynamically, and indicating that the corresponding DL signal is not transmitted during a predefined time. Hereinafter, a NES mode may refer to an operation mode in which the BS does not perform transmission and/or reception through a corresponding antenna port to reduce power consumption of the BS and the UE, for example, when a specific reception antenna port is turned off semi-statically or dynamically in BWP switching, dynamic resource block (RB) adaptation, and the like in the frequency domain as well as the domain, and in the spatial domain.

In the present disclosure, NAP represents "number of antenna port" and PCO represents "power control offset." Here, PCO may mean an RRC parameter *powerControlOffset* indicating a power offset value of PDSCH RE to NZP CSI-RS RE or may also mean *powerControlOffsetSS,* which means a ratio of NZP CSI-RS EPRE to SS/PBCH block EPRE. In the former case, PDSCH power may be adjusted based on CSI-RS power, and in the latter case, CSI-RS power may be adjusted based on SSB power. The following is a description of a parameter *powerControlOffset* and a parameter *powerControlOffsetSS* disclosed in 3GPP TS 38.331 and the parameter *powerControlOffset* and the parameter *powerControlOffsetSS* may be provided to the UE by the BS through RRC signaling.

**Table 11**

| |
|---|
| *powerControlOffset:* which is the assumed ratio of PDSCH EPRE to NZP CSI-RS EPRE when UE derives CSI feedback and takes values in the range of [-8, 15] dB with 1 dB step size. For CQI calculation based on a pair of NZP CSI-RS resources, *powerControlOffset* of each NZP CSI-RS resource in the pair of NZP CSI-RS resources for channel measurement is the assumed ratio of EPRE when UE derives CSI feedback and takes values in the range of [-8, 15] dB with 1 dB step size. |
| *powerControlOffsetSS*: which is the assumed ratio of NZP CSI-RS EPRE to SS/PBCH block EPRE. |

The BS may turn on and off certain spatial elements (in the present disclosure, spatial elements may mean antenna ports or active transceiver chains or panels or TRPs) for NES purposes or adjust a power value for a downlink signal/channel. The BS links CSI-RS resources (sets) with different antenna ports for one CSI report setting (e.g., CSI-ReportConfig) to dynamically apply various NES technologies in these power and power domains or may link a plurality of power offset parameters (e.g., a parameter *powerControlOffset,* which is a power offset value between PDSCH and CSI-RS, or a parameter *powerControlOffsetSS,* which is a power offset value between SSS and CSI-RS) with each other.

At least one CSI framework from among the following methods may be introduced.
- Method#1: A plurality of CSI-RS resource sets may be linked with one CMR (CMR may be an abbreviation of a channel measurement resource and may be configured by a parameter *resourcesForChannelMeasurement)* or one **IMR** (IMR may be an abbreviation of interference measurement resource and may be configured by a parameter *csi-IM-ResourcesForInterference* or *nzp-CSI-RS-ResourcesForInterference*) within *CSI-ReportConfig* configuration. For example, for CMR, CSI-RS resource set #1 and CSI-RS resource set #2 may be linked with each other, and the CSI-RS resources belonging to set #1 may include 16 antenna ports (AP), and CSI-RS resources belonging to set #2 may include 8 APs.
- Method #2: When there is one CSI-RS resource set linked to one CMR or one IMR in the CSI-ReportConfig configuration, the corresponding set includes one or more CSI-RS resources with different attributes such as the numbers of APs and/or power offset. For example, for CSI-RS resource set #1 configured with CMR, CSI-RS resource #1 belonging to set #1 may include 16 APs (or power offset #1 value is configured) and CSI-RS resource #1 belonging to the same set may include 8 APs (or power offset #2 value is configured).
- Method #3: When there is one CSI-RS resource set linked to one CMR or one IMR in the CSI-ReportConfig configuration, some or all CSI-RS resource(s) in the corresponding set may be configured to multiple APs and/or power offsets. For example, for CSI-RS resource set #1 configured to CMR, CSI-RS resource #1 belonging to set #1 may be configured to a maximum of 16 APs and CSI report using some of the AP(s) may be configured, or CSI-RS resource #2 belonging to the same set may be configured to configure CSI report using all or part of the power offset values.

Under the CSI framework described above, a CSI reporting method may be defined through at least one of the following options.
- Option #1: CSIs considering the number of multiple APs and/or multiple power offset values configured in one CSI report may all be included in one CSI report. Alternatively, CSIs considering the number of multiple APs and/or plurality of power offsets through the settings/instructions of the BS (in this case, the number of APs and/or power offsets configured/indicated through the BS are some of the number of APs and/or power offset values configured in the corresponding CSI report) may be included in one CSI report.
- Option #2: Even if multiple AP numbers and/or multiple power offset values are configured in one CSI report, CSIs considering the single AP number and/or single power offset through the configuration/instruction of the BS are included in one CSI report.
- Option #3: Even if multiple AP numbers and/or multiple power offset values are configured in one CSI report, CSIs considering the number of some APs and/or some power offsets may be included in one CSI report through determination/decision (by using criteria preconfigured or predefined by the BS).

L(>1) sub-configurations may be configured within the CSI-ReportConfig configuration, and each sub-configuration may correspond to one spatial or power domain adaptation pattern. Here, a spatial domain adaptation pattern can be corresponding to a specific antenna port (or antenna port on/off pattern) or a specific CSI-RS power value (e.g. CSI-RS power value determined by PowerControlOffsetSS parameter, which is a power offset value between SSS and CSI-RS. This is because, if some antenna elements corresponding to one antenna port are turned off, the CSI-RS power value may be affected). When Method #2 is applied, the spatial domain adaptation pattern may be configured differently for each sub-configuration by linking sub-configuration index #s1 with CSI-RS index #n1 and linking sub-configuration index #s2 with CSI-RS index #n2 when CSI-RS index #n1 belonging to a resource set is configured with the number of A1 APs (or P1 power value) and CSI-RS index #n2 belonging to the same set is configured with the number of A2 APs (or P2 power value). When Method #3 is applied, the spatial domain adaptation pattern may be configured differently for each sub-configuration by linking sub-configuration index #s1 with the number of A1 APs (or P1 power value) and linking sub-configuration index #s2 with the number of A2 APs, A2 is being less than A1 constituting CSI-RS index #n1, with sub-configuration index #s2 when CSI-RS index #n1 belonging to a resource set is configured with the number of A1 APs (or P1/P2 power value). The power domain adaptation pattern means that a power offset value (e.g., power offset value determined by a parameter *powerControlOffset,* which is a power offset value between PDSCH and CSI-RS, and a parameter *powerControlOffsetSS,* which is a power offset value between SSS and CSI-RS) changes. When Method #2 is applied, power domain adaptation pattern may be configured differently for each sub-configuration by linking sub-configuration index #s1 with CSI-RS index#n1 and linking sub-configuration #s2 with CSI-RS index #n2 when CSI-RS index #n1 belonging to a resource set is configured with a P2 power value and CSI-RS index #n2 belonging to the same set is configured with a P2 power value. When Method #3 is applied, a power domain adaptation pattern may be configured differently for each sub-configuration by linking sub-configuration index #s 1 with a P1 power value and linking sub-configuration index #s2 to a P2 power value when CSI-RS index #n1 belonging to a resource set is configured with the P1 power value (and the P2 power value). A CSI report including CSIs corresponding to N (a value N which is equal to or greater than 1 and equal to or smaller than L) sub-configurations from among the corresponding L sub-configurations (by using one of the above Option #1/2/3 methods) may be fed back to the BS.

### <S3.1_Method#1: Method of configuring priority for each sub-configuration or sub-configuration group, corresponding to candidate NAP and/or PCO for (type-1 and/or type-2) space and/or power adaptation when a UE receives CSI report configuration from a BS>

For periodic/semi-persistent CSI report on PUCCH or semi-persistent CSI report on PUSCH, the UE may receive configuration of *CSI-ReportConfig* (refer to Tables 6-1 to 6-5) from the BS. In this case, the UE may receive information elements corresponding to a plurality of NAP and/or PCO configurations to be measured for spatial and power adaptation of the BS through a plurality of sub-configurations, and each sub-configuration may be pre-associated with a specific NZP CSI-RS resource/CSI-RS resource set/CSI-RS resource configuration. The UE may report multiple CSIs corresponding to multiple sub-configurations to the BS when the periodic/semi-persistent CSI report occurs at a periodic/semi-persistent CSI report occasion or when the semi-persistent/aperiodic CSI report is triggered.

In this case, priorities may be configured for each sub-configuration index or for each sub-configuration index group, or in index order. For example, sub-configuration parameters AdaptPattern#1, AdaptPattern#2, and AdaptPattern#3 corresponding to various spatial adaptation patterns and sub-configuration parameters AdaptPattern#4, AdaptPattern#5, and AdaptPattern#6 corresponding to various PCO values may be configured as sub-configurations within CSI report configuration, and as an index is reduced (or increased), a priority may be defined to be increased. Here, AdaptPattern#1 may be sub-configuration corresponding to NAP=32, AdaptPattern#2 may be sub-configuration corresponding to NAP=16, and AdaptPattern#3 may be sub-configuration corresponding to NAP=16 and have the same NAP AdaptPattern#2 but may be associated with a CSI-RS resource or a CSI-RS resource set with lower power of CSI-RS. AdaptPattern#4 may be sub-configuration corresponding to PCO = -3dB, AdaptPattern#5 may be sub-configuration corresponding to PCO = 0dB, and AdaptPattern#6 may be sub-configuration corresponding to PCO = +3 dB. For example, AdaptPattern#1 and AdaptPattern#2 may be sub-configurations having different NAPs and may correspond to type-1 spatial element adaptation (refer to description of FIG. 9(a)), and AdaptPattern#2 and AdaptPattern#3 may be sub-configurations having the same NAP but differently configured ON/OFF of TXRU connected to each port and may correspond to type-2 spatial element adaptation (refer to description of FIG. 9(b)).

Sub-configurations may be grouped and priorities may be configured for respective sub-configuration groups. For example, the BS may configure AdaptPattern#1, AdaptPattern#3, and AdaptPattern #5 to AdaptPatternGroup#1 and configure AdaptPattern#2, AdaptPattern#4, and AdaptPattern#6 to AdaptPatternGroup#2, and AdaptPatternGroup#1 may be configured with a higher priority than AdaptPattern#2. In some implementations, when parameters corresponding to specific NAPs and/or PCOs are configured within the CSI report configuration without a separate sub-configuration index (or sub-configuration group index), priorities may be automatically configured/assigned/defined to be high priority sub-configuration in the order in which the priorities are configured or the BS may also configure priorities for respective sub-configurations. There may be a need to increase or decrease a priority of specific adaptation after the BS configures the sub-configuration and priority, and thus a priority of specific sub-configuration may be directly indicated or one of a plurality of priority candidates per sub-configuration may also be indicated through a MAC control element (CE) or a group-common DCI to change the priority more dynamically compared to the RRC configuration.

When the BS wants to obtain energy saving (ES) gains through spatial and power adaptation, a plurality of spatial adaptation patterns configured to the UE and/or an antenna adaptation pattern corresponding to specific sub-configuration from among power control offset candidates or report for CSIs corresponding to a power control offset value may be configured/instructed to be used to adjust an antenna element or adjust DL power. When the UE is configured/instructed to carry CSIs for multiple NAP and/or PCO values in the CSI report, if the amount of CSIs to be reported is greater than the amount of allocated resources, the UE may omit CSI(s) for sub-configuration with a low priority and transmit CSI with the highest priority in the CSI report.

The following table shows the main purpose (i.e. target transmission scheme) for each report quantity when the report quantity is configured in IE *CSI-ReportConfig* for CSI report or beam management (BM).

**Table 12**

| Quantity | Main purpose |
|---|---|
| (CRI)/RI/(LI)/PMI/CQI | Conventional closed-loop precoding/MIMO |
| (CRI)/RI/i1 | Hybrid CSI |
| (CRI)/RI/i1/CQI | Semi-OL precoding/MIMO |
| (CRI)/RI/CQI | Non-PMI feedback (TDD) |
| CRI or SSBRI/RSRP | Beam reporting (BM Phase-2: beam refinement for transmitter (BS Tx)) |
| No report | Beam reporting (BM Phase-3: beam refinement for receiver (UE Rx)) |

Like type-2 spatial element adaptation for CSI report or BM in the table above, the BS may perform beam broadening by reducing the number of elements constituting a subarray in a subarray model, and as such, specific transmission scheme and the priorities of sub-configurations may be considered to be associated with each other. For example, in cases such as beam broadening (e.g. type-2 spatial element adaptation), (cycling-based) open-loop diversity is advantageous, and thus the BS may configure a report quantity corresponding to a corresponding transmission method in *CSI-ReportConfig* to configure/instruct a priority of sub-configuration corresponding to the transmission method to be high. In other words, referring to the table above, when a parameter *reportQuantity* is set to (CRI)/RI/i1/CQI in *CSI-ReportConfig,* the main purpose is semi-OL, and thus the UE and the BS may preferentially consider type-2 spatial element adaptation when *reportQuantity* is (CRI)/RI/i1/CQI and preferentially consider type-1 spatial element adaptation when other reportQuantity is configured. In conclusion, the BS may configure a priority of specific sub-configuration to be high through *reportQuantity* in CSI report configuration.

### <S3.2_Method#2: Method in which a BS pre-configures a threshold (e.g., target CQI) and a UE reports CSI corresponding to specific NAP and/or PCO configuration or CSIs corresponding to a plurality of NAPs and/or PCO configurations only when the threshold is exceeded, and otherwise, the UE performs only a default report (or dose not transmit a CSI report)>

When the BS wants to save energy through spatial or power adaptation, it may be important to ensure that a communication service provided to the UE maintains a certain level of performance even after such adaptation for energy saving. For example, energy of the BS may be saved through spatial adaptation by reducing the number of antenna ports or by reducing PDSCH power, but when UEs do not receive information properly (e.g., PDSCH decoding failure) and require multiple retransmissions with a high probability, resource efficiency may decrease and transmission delays may also be long. Therefore, the BS may receive a report of CSIs for a plurality of preconfigured NAP and/or PCO configuration candidates and determine which adaptation to perform by considering the trade-off between DL performance and ES gain. However, when all always configured CSIs corresponding to multiple NAP and/or PCO configurations for each periodic/semi-persistent CSI report (or semi-persistent/aperiodic CSI report) configured to the UE, this may not be efficient considering the complexity of the UE and CSI report resources. Therefore, in some implementations of the present disclosure, the UE may receive a threshold preconfigured from the BS, and reports CSIs for multiple NAP and/or PCO configurations through a single CSI report only when the threshold is exceeded (or transmission in the form of time division multiplexing (TDM) in which CSIs for the multiple NAPs and/or PCO configurations are divided into N CSI reports and transmitted in different time resources), or may determine whether to perform CSI report for a certain NAP and/or PCO based on the threshold.

In some implementations, parameters *reportQuantity* included in CSI reporting configuration such as target CQI/target RI/target LI/target PMI (refer to Table 6-1 to Table 6-5) may be configured to be associated with a threshold value for a specific NZP CSI-RS resource, CSI-RS resource set and/or CSI-RS resource configuration as a threshold.

**Table 13**

| CQI index | modulation | code rate x 1024 | efficiency |
|---|---|---|---|
| 0 | out of range | | |
| 1 | QPSK | 78 | 0.1523 |
| 2 | QPSK | 120 | 0.2344 |
| 3 | QPSK | 193 | 0.3770 |
| 4 | QPSK | 308 | 0.6016 |
| 5 | QPSK | 449 | 0.8770 |
| 6 | QPSK | 602 | 1.1758 |
| 7 | 16QAM | 378 | 1.4766 |
| 8 | 16QAM | 490 | 1.9141 |
| 9 | 16QAM | 616 | 2.4063 |
| 10 | 64QAM | 466 | 2.7305 |
| 11 | 64QAM | 567 | 3.3223 |
| 12 | 64QAM | 666 | 3.9023 |
| 13 | 64QAM | 772 | 4.5234 |
| 14 | 64QAM | 873 | 5.1152 |
| 15 | 64QAM | 948 | 5.5547 |

The above table is Table 5.2.2.1-2 of 3GPP TS 38.214 and is a 4-bit CQI table. For example, when NAP=32 and NAP=16 are configured as adaptation pattern candidates, target CQI index=7 in the table above is configured as a threshold, and the CSI corresponding to NAP=16 is transmitted through CSI report only in the case of the threshold or more, the UE may calculate CSIs assuming NAP=32 and NAP=16 for each preconfigured periodic/semi-persistent CSI report period or whenever semi-persistent/aperiodic CSI report is triggered and report the CSI (e.g., CRI/PMI/RI/CQI) corresponding to NAP=16 when CQI is equal to or greater than 7 in NAP=16, and otherwise, the UE may report only the CSI in AP=32.

Alternatively, when NAP=32 and NAP=16 are configured as adaptation pattern candidates, target CQI index=7 in the table above is configured as a threshold, and a plurality of CSIs corresponding to NAP=32 and NAP=16 are transmitted through CSI report only in the case of the threshold or more, the UE may calculate CSIs assuming NAP=32 and NAP=16 for each preconfigured periodic/semi-persistent CSI report period or whenever semi-persistent/aperiodic CSI report is triggered and report the plurality of CSIs corresponding to NAP=32 and NAP=16 when CQI is equal to or greater than 7 in NAP=16, and otherwise, the UE may report only the CSI in AP=32.

In Method #2, the information regarding how many sub-configurations (indexes) the CSI is to be included in the CSI report and/or which sub-configuration (index) the CSI itself is to be included in the CSI report may be included in CSI Part 1.

### <S3.2_Method#3: Method in which a BS is configured to always select and report preconfigured N CSIs from among CSIs corresponding to a plurality of NAPs and/or PCO configurations to prevent UCI payload size mismatch between the BS and the UE>

As described above, the BS may configure a plurality of NAPs and/or PCO configurations to the UE, receive a report of corresponding CSIs from the UE, and determine appropriate adaptation configuration. In terms of the BS, it may be optimal to receive reports of CSI for as many or all (NAP and PCO) combinations as possible and make a decision after comparison, but in terms of the UE, it may be burdensome to calculate and report CSIs corresponding to all NAP and/or PCO configurations for each CSI report. Therefore, as in Method#2, the BS may configure a threshold like a target CQI value through the CSI report configuration, and thus the UE may transmit CSI (s) for only the NAP and/or PCO configuration(s) beyond the threshold, but the number of configurations beyond the threshold from among the plurality of NAP and/or PCO configurations may be changed every time CSI reporting is performed, and thus there may be mismatch of UCI payload size included in the CSI report between the BS and the UE.

Therefore, when CSI reporting is performed, the UE may be preconfigured as to how many CSIs to include in the CSI report from among the CSIs for a plurality of pre-configured NAP and/or PCO candidates. For example, the UE may be configured to receive M NAP and/or PCO candidates and configure the CSI report to include only CSIs corresponding to up to N (M>N) configurations from among the NAP and/or PCO configurations exceeding the threshold. In this case, handling may be necessary for cases in which the number of NAP and/or PCO configurations exceeding the configured threshold is greater or less than N. For example, when the maximum number of NAP and/or PCO configurations in which the corresponding CSI is to be included in a CSI report corresponds to N = 2, target CQI index in Table 12=7, and the number of configurations exceeding the threshold from among M = 4 candidate NAP and/or PCO configurations is 3, the UE may select only CSIs corresponding to NAP and/or PCO configurations of the highest N=2 CQI indices (or the two highest priorities based on the priorities preconfigured in the candidate NAP and/or PCO configurations) and transmit the selected CSIs in the CSI report. The BS may separately configure a CSI report resource to be used when the number of NAP and/or PCO configurations exceeding the configured threshold is equal to or greater than N and a CSI report resource to be used when the number of NAP and/or PCO configurations exceeding the configured threshold is less than N and may allow the UE to report the CSI by using either CSI report resource. For example, in the previous example, when the UE has only one NAP and/or PCO configuration that exceeds the configured threshold, the BS may be configured to use a CSI report resource for legacy CSI report transmission (i.e., CSI report resource used when CSI for one NAP and PCO value is used) and use *multi-CSI-PUCCH-Resource* when the UE has two or more NAP and/or PCO configurations. Alternatively, when the number of NAP and/or PCO configurations exceeding the configured threshold is less than N (e.g., K), the BS may configure the UE to select CSIs corresponding to K NAP and/or PCO configurations and transmit the selected CSIs in the CSI report. Alternatively, as another method, the information regarding how many sub-configurations the CSI is to be included in the CSI report and/or which sub-configuration the CSI itself is to be included in the CSI report may be included in CSI Part 1.

In some implementations, in the case of aperiodic CSI report, an aperiodic CSI trigger state (e.g., CSI request field) in DCI format 0_1 used for scheduling of PDSCH for one cell or DCI format 0_2 used for scheduling of PUSCH for one cell, and an index of a specific aperiodic trigger state from among the indexes of aperiodic trigger states configured by *CSI-AperiodicTriggerStateList* is indicated through the DCI, or a code point defined in the MAC CE is indicated through the DCI. A bit length of this field may be determined by a parameter *reportTriggerSize* of *CSI-MeasConfig,* which is an RRC configuration, when the bit length is sufficient, a specific aperiodic trigger state is indicated only by DCI, as in the former case, and when the bit length is not sufficient, as in the latter case, a mapping relation for each codepoint to be indicated by a DCI field may be configured by the MAC CE. In this case, the BS may preconfigure a connection relation between an index indicated by an aperiodic CSI trigger state in DCI format 0_1 or 0_2 and a sub-configuration index (or sub-configuration group index) corresponding to a NAP and/or PCO value configured in *CSI-ReporgConfig* to indicate a specific aperiodic CSI trigger state index, allowing the UE to transmit the CSI corresponding to the NAP and/or PCO value linked thereto in the aperiodic CSI report. For example, the bit length of the aperiodic CSI trigger status in DCI format 0_1 is 3 (i.e., the length of the aperiodic CSI trigger state field in DCI format 0_1 is 3-bit) and an index 001 is configured to be linked to a sub-configured group configured in *CSI-ReportConfig,* and when AdaptPatternGroup#1 includes AdaptPattern#1 with NAP = 32, AdaptPattern#2 with NAP = 16, and AdaptPattern#3 with PCO = -3dB, if 001 is indicated through DCI, the UE may transmit CSIs corresponding to two NAP values and PCO value belonging to AdaptPatternGroup#1 (i.e., CSI for NAP = 32, CSI for NAP = 16, and CSI for PCO = -3Db) in the aperiodic CSI report.

In some implementations, in the methods described above, the UE for containing CSIs for multiple sub-configurations within one CSI report has the CMR group-related capability of Rel-17 MIMO to support the feature of pairing CMRs for non-coherent joint transmission (NCJT) M-TRP CSI and transmitting multiple PMIs/CQIs in one CSI report. In other words, the capability to contain multiple sub-configurations in one CSI report may be supported only for UEs that support the corresponding feature, and for UEs that do not support the corresponding feature, even if multiple sub-configuration information is configured in one CSI report, CSI report may be configured with only CSI information corresponding to one sub-configuration (by BS instruction or UE selection).

Methods #1 to #3 described above may be applied independently or in combination of two or more.

According to some implementations of the present disclosure, the BS may perform spatial domain or power domain adaptation based on CSI reports that include CSIs based on CSI sub-configuration(s). According to some implementations of the present disclosure, CSI reports utilized for network energy saving may be provided with low signaling overhead.

FIG. 9 illustrates a flow of CSI report transmission in a UE according to some implementations of the present disclosure.

The UE may perform operations according to some implementations of the present disclosure in association with a CSI report. The UE may include at least one transceiver; at least one processor; and at least one computer memory operably connectable to the at least one processor and storing instructions that, when executed, cause the at least one processor to perform operations according to some implementations of the present disclosure. A processing device for a UE may include at least one processor; and at least one computer memory operably connectable to the at least one processor and storing instructions that, when executed, cause the at least one processor to perform operations according to some implementations of the present disclosure. A computer readable (non-transitory) storage medium may store at least one computer program including instructions that, when executed by at least one processor, cause the at least one processor to perform operations according to some implementations of the present disclosure. A computer program or a computer program product may include instructions recorded in at least one computer readable (non-transitory) storage medium and causing, when executed, (at least one processor) to perform operations according to some implementations of the present disclosure.

In the method performed by the UE, or the UE, the processing device, the computer-readable (non-transitory) storage medium, and/or the computer program product, the operations includes receiving a CSI report configuration including a plurality of sub-configurations (S901), each of the plurality of sub-configurations including at least one CSI-RS resource and a PCO value related to the at least one CSI-RS resource, determining a plurality of CSIs (e.g., CQI values) based on the plurality of sub-configurations (S903), and transmitting a CSI report based on the plurality of CQI values (S905), and in this case, the CSI report configuration includes a CSI threshold, and based on presence of a CSI value greater than the CSI threshold from among the plurality of CSI values, the CSI report includes the CSI value greater than the CSI threshold.

In some implementations, based on absence of a CSI value (e.g., CQI value) greater than the CSI threshold from among the plurality of CSI values, the CSI report may not include a CSI value.

In some implementations, the CSI report may include a first CSI part and a second CSI part, and the first CSI part may include sub-configuration related information regarding a sub-configuration in which the corresponding CSI value is included in the CSI report.

In some implementations, the sub-configuration related information may include information regarding the number of sub-configurations in which the corresponding CSI value is included in the CSI report.

In some implementations, the sub-configuration related information may include an index of a sub-configuration in which the corresponding CSI value is included in the CSI report.

In some implementations, the CSI report configuration may further include information regarding the maximum number K of sub-configurations in which the corresponding CSI is included in the CSI report, and based on the number of the CSI values greater than the CSI threshold being greater than K from among the plurality of CSI values, the CSI report may include only K CSI values greater than the CSI threshold.

In some implementations, based on the number of CSI values greater than the CSI threshold being greater than K from among the plurality of CSI values, the CSI report may include only a CSI value greater than the CSI threshold.

In some implementations, the PCO value may be a power offset value of physical downlink shared channel (PDSCH) resource element (RE) to CSI-RS RE for the CSI-RS RE assumed when the UE derives a CSI value.

FIG. 10 illustrates a flow of CSI report reception in a BS according to some implementations of the present disclosure.

The BS may perform operations according to some implementations of the present disclosure in association with reception of a CSI report. The BS may include at least one transceiver; at least one processor; and at least one computer memory operably connectable to the at least one processor and storing instructions that, when executed, cause the at least one processor to perform operations according to some implementations of the present disclosure. A processing device for a BS may include at least one processor; and at least one computer memory operably connectable to the at least one processor and storing instructions that, when executed, cause the at least one processor to perform operations according to some implementations of the present disclosure. A computer readable (non-transitory) storage medium may store at least one computer program including instructions that, when executed by at least one processor, cause the at least one processor to perform operations according to some implementations of the present disclosure. A computer program or a computer program product may include instructions recorded in at least one computer readable (non-transitory) storage medium and causing, when executed, (at least one processor) to perform operations according to some implementations of the present disclosure.

In the method performed by the BS, or the BS, the processing device, the computer-readable (non-transitory) storage medium, and/or the computer program product, the operations includes transmitting a CSI report configuration including a plurality of sub-configurations (S1001), each of the plurality of sub-configurations including at least one CSI-RS resource and a PCO value related to the at least one CSI-RS resource, and receiving a CSI report related to the CSI report configuration (S1005), and in this case, the CSI report configuration includes a CSI threshold, and based on presence of a CSI value greater than the CSI threshold from among the plurality of CSI values (e.g., a plurality of CQI values) for the plurality of sub-configurations.

In some implementations, based on absence of a CSI value (e.g., CQI value) greater than the CSI threshold from among the plurality of CSI values, the CSI report may not include a CSI value.

In some implementations, the CSI report may include a first CSI part and a second CSI part, and the first CSI part may include sub-configuration related information regarding a sub-configuration in which the corresponding CSI value is included in the CSI report.

In some implementations, the sub-configuration related information may include information regarding the number of sub-configurations in which the corresponding CSI value is included in the CSI report.

In some implementations, the sub-configuration related information may include an index of a sub-configuration in which the corresponding CSI value is included in the CSI report.

In some implementations, the CSI report configuration may further include information regarding the maximum number K of sub-configurations in which the corresponding CSI is included in the CSI report, and based on the number of the CSI values greater than the CSI threshold being greater than K from among the plurality of CSI values, the CSI report may include only K CSI values greater than the CSI threshold.

In some implementations, based on the number of CSI values greater than the CSI threshold being greater than K from among the plurality of CSI values, the CSI report may include only a CSI value greater than the CSI threshold.

In some implementations, the PCO value may be a power offset value of physical downlink shared channel (PDSCH) resource element (RE) to CSI-RS RE for the CSI-RS RE assumed when the UE derives a CSI value.

The examples of the present disclosure as described above have been presented to enable any person of ordinary skill in the art to implement and practice the present disclosure. Although the present disclosure has been described with reference to the examples, those skilled in the art may make various modifications and variations in the example of the present disclosure. Thus, the present disclosure is not intended to be limited to the examples set for the herein, but is to be accorded the broadest scope consistent with the principles and features disclosed herein.

The implementations of the present disclosure may be used in a BS, a UE, or other equipment in a wireless communication system.

## Claims

1. A method of transmitting a channel state information (CSI) report by a user equipment (UE) in a wireless communication system, the method comprising:
receiving a CSI report configuration including a plurality of sub-configurations, wherein each of the plurality of sub-configurations includes at least one CSI-reference signal (CSI-RS) resource and a power control offset (PCO) value related to the at least one CSI-RS resource;
determining a plurality of channel quality indicator (CQI) values based on the plurality of sub-configurations; and
transmitting the CSI report based on the plurality of CQI values,
wherein the CSI report configuration includes a CQI threshold, and
wherein, based on presence of a CQI value greater than the CQI threshold from among the plurality of CQI values, the CSI report includes the CQI value greater than the CQI threshold.

2. The method of claim 1, wherein, based on absence of a CQI value greater than the CQI threshold from among the plurality of CQI values, the CSI report does not include the CQI value.

3. The method of claim 1, wherein the CSI report includes a first CSI part and a second CSI part, and
wherein the first CSI part includes sub-configuration related information regarding a sub-configuration in which a corresponding CQI value is included in the CSI report.

4. The method of claim 3, wherein the sub-configuration related information includes information regarding a number of sub-configurations in which a corresponding CQI value is included in the CSI report.

5. The method of claim 3, wherein the sub-configuration related information includes an index of a sub-configuration in which a corresponding CQI value is included in the CSI report.

6. The method of claim 1, wherein the CSI report configuration further includes information regarding a maximum number K of sub-configurations in which a corresponding CSI is included in the CSI report, and
wherein, based on a number of CQI values greater than the CQI threshold being greater than K from among the plurality of CQI values, the CSI report includes K CQI values greater than the CQI threshold.

7. The method of claim 6, wherein, based on a number of CQI values greater than the CQI threshold being less than K from among the plurality of CQI values, the CSI report includes only a CQI value greater than the CQI threshold.

8. The method of claim 1, wherein the PCO value includes a power offset value of physical downlink shared channel (PDSCH) resource element (RE) to CSI-RS RE for the CSI-RS RE assumed when the UE derives a CQI value.

9. A user equipment (UE) for transmitting a channel state information (CSI) report in a wireless communication system, the UE comprising:
at least one transceiver;
at least one processor; and
at least one computer memory operably connected to the at least one processor and configured to store instructions that, when executed, cause the at least one processor to perform operations including:
receiving a CSI report configuration including a plurality of sub-configurations, wherein the plurality of sub-configurations includes at least one CSI-reference signal (CSI-RS) resource and a power control offset (PCO) value related to the at least one CSI-RS resource;
determining a plurality of channel quality indicator (CQI) values based on the plurality of sub-configurations; and
transmitting the CSI report based on the plurality of CQI values,
wherein the CSI report configuration includes a CQI threshold, and
wherein, based on presence of a CQI value greater than the CQI threshold from among the plurality of CQI values, the CSI report includes the CQI value greater than the CQI threshold.

10. A processing device in a wireless communication system, the processing device comprising:
at least one processor; and
at least one computer memory operably connected to the at least one processor and configured to store instructions that, when executed, cause the at least one processor to perform operations including:
receiving a CSI report configuration including a plurality of sub-configurations, wherein the plurality of sub-configurations includes at least one CSI-reference signal (CSI-RS) resource and a power control offset (PCO) value related to the at least one CSI-RS resource;
determining a plurality of channel quality indicator (CQI) values based on the plurality of sub-configurations; and
transmitting the CSI report based on the plurality of CQI values,
wherein the CSI report configuration includes a CQI threshold, and
wherein, based on presence of a CQI value greater than the CQI threshold from among the plurality of CQI values, the CSI report includes the CQI value greater than the CQI threshold.

11. A computer-readable storage medium for storing at least one program code including instructions that, when executed, cause the at least one processor to perform operations comprising:
receiving a CSI report configuration including a plurality of sub-configurations, wherein the plurality of sub-configurations includes at least one CSI-reference signal (CSI-RS) resource and a power control offset (PCO) value related to the at least one CSI-RS resource;
determining a plurality of channel quality indicator (CQI) values based on the plurality of sub-configurations; and
transmitting the CSI report based on the plurality of CQI values,
wherein the CSI report configuration includes a CQI threshold, and
wherein, based on presence of a CQI value greater than the CQI threshold from among the plurality of CQI values, the CSI report includes the CQI value greater than the CQI threshold.

12. A method of receiving a channel state information (CSI) report from a user equipment (UE) by a base station (BS) in a wireless communication system, the method comprising:
transmitting a CSI report configuration including a plurality of sub-configurations, wherein the plurality of sub-configurations includes at least one CSI-reference signal (CSI-RS) resource and a power control offset (PCO) value related to the at least one CSI-RS resource; and
receiving the CSI report related to at least one of the plurality of sub-configurations,
wherein the CSI report configuration includes a CQI threshold, and
wherein, based on presence of a CQI value greater than the CQI threshold from among the plurality of CQI values, the CSI report includes the CQI value greater than the CQI threshold.

13. A base station (BS) for receiving a channel state information (CSI) report from a user equipment (UE) in a wireless communication system, the BS comprising:
at least one transceiver;
at least one processor; and
at least one computer memory operably connected to the at least one processor and configured to store instructions that, when executed, cause the at least one processor to perform operations including:
transmitting a CSI report configuration including a plurality of sub-configurations, wherein the plurality of sub-configurations includes at least one CSI-reference signal (CSI-RS) resource and a power control offset (PCO) value related to the at least one CSI-RS resource; and
receiving the CSI report related to at least one of the plurality of sub-configurations,
wherein the CSI report configuration includes a CQI threshold, and
wherein, based on presence of a CQI value greater than the CQI threshold from among the plurality of CQI values, the CSI report includes the CQI value greater than the CQI threshold.

14. The BS of claim 13, wherein, based on absence of a CQI value greater than the CQI threshold from among the plurality of CQI values, the CSI report does not include the CQI value.

15. The BS of claim 13, wherein the CSI report includes a first CSI part and a second CSI part, and
wherein, the first CSI part includes sub-configuration related information regarding a sub-configuration in which a corresponding CQI value is included in the CSI report.

16. The BS of claim 15, wherein the sub-configuration related information includes information regarding a number of sub-configurations in which a corresponding CQI value is included in the CSI report.

17. The BS of claim 15, wherein the sub-configuration related information includes an index of a sub-configuration in which a corresponding CQI value is included in the CSI report.

18. The BS of claim 13, wherein the CSI report configuration further includes information about a maximum number K of sub-configurations in which a corresponding CSI is included in the CSI report, and
wherein, based on a number of CQI values greater than the CQI threshold being greater than K from among the plurality of CQI values, the CSI report includes K CQI values greater than the CQI threshold.

19. The BS of claim 18, wherein, based on a number of CQI values greater than the CQI threshold being less than K from among the plurality of CQI values, the CSI report includes only a CQI value greater than the CQI threshold.

20. The BS of claim 13, wherein the PCO value includes a power offset value of physical downlink shared channel (PDSCH) resource element (RE) to CSI-RS RE for the CSI-RS RE assumed when the UE derives a CQI value.
